# EUROPEAN PATENT APPLICATION

(11) **EP 4 722 222 A1**
(43) Date of publication of application: **08.04.2026**
(21) Application number: 24815237.3
(22) Date of filing: 16.05.2024
(51) Int. Cl.: C07F 7/18, C08G 77/26

(54) **BISSILYL COMPOUND HAVING SILYL GROUP SUBSTITUTED WITH ORGANOXYSILYLALKYLAMINO GROUP AND METHOD FOR PRODUCING SAME, AND COMPOSITION AND CURED PRODUCT CONTAINING SAME**

(30) Priority: 26.05.2023 JP 2023086673
(71) Applicant: SHIN-ETSU CHEMICAL CO., LTD., Tokyo 100-0005 (JP)
(72) Inventor: KAWAKAMI, Masato, Joetsu-shi, Niigata 942-8601 (JP)
(74) Representative: Mewburn Ellis LLP
(86) International application number: PCT/JP2024/018183
(87) International publication number: WO 2024/247753

(57) **Abstract**

A bissilyl compound having a silyl group substituted with an organoxysilylalkylamino group represented by general formula (1) can rapidly form a film without a catalyst and yields a coating film resistant to cracks and whitening. 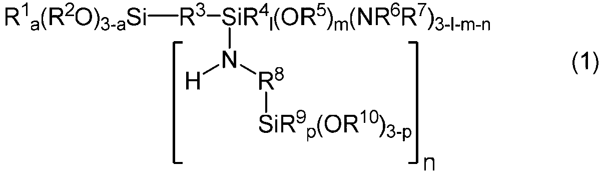 (R¹, R², R⁴-R⁷, R⁹, and R¹⁰ represent an unsubstituted C1-10 monovalent hydrocarbon group, R⁶ and R⁷ may bond to each other to form a C2-10 ring structure together with nitrogen atoms, the ring structure may contain at least one element selected from the group consisting of O and N in addition to the nitrogen atoms, R³ and R⁸ represent a C2-10 divalent hydrocarbon group that may contain at least one element selected from O, N, S, and Si, a represents 0, 1, or 2, 1 and m each represent 0, 1, or 2, n represents 1, 2, or 3, and p represents 0, 1, or 2.)

## Description

### TECHNICAL FIELD

The present invention relates to bissilyl compounds which have a silyl group substituted with an organoxysilylalkylamino group, a method for preparing the same, and compositions and cured products containing such compounds.

### BACKGROUND ART

Organoxysilane compounds are used as, for example, silane coupling agents, surface treatment agents, resin additives, coating additives, adhesives, coating agents and primers.

Known examples of such organoxysilane compounds include tetraorganoxysilane compounds such as tetramethoxysilane and tetraethoxysilane, and triorganoxysilane compounds such as octyltrimethoxysilane, 3-aminopropyltrimethoxysilane and 3-methacryloxypropyltrimethoxysilane.

In these organoxysilane compounds having a single silicon atom on the molecule, there are a maximum of four organoxy groups that act as reaction sites when the compound is used in the above applications.

One known compound that has even more reaction sites and the addition of which is thought to have a large effect is 1,2-bis(trimethoxysilyl)ethane. This compound has two silicon atoms on the molecule, and thus possesses six organoxy groups.

These organoxysilane compounds having many organoxy groups sometimes end up gelling when hydrolytic condensation reactions proceed upon use of the compound. In order to resolve this problem, organoxysilane compounds in which a dialkylamino group (secondary amino group) is partially bonded to a silyl group have been described (Patent Document 1).

### PRIOR ART DOCUMENT

### PATENT DOCUMENT

Patent Document 1: JP-A 2017-141180

### SUMMARY OF INVENTION

### TECHNICAL PROBLEM

In cases where an organoxysilane compound is employed as, in particular, a coating agent or a primer, there is the drawback that, unless a catalyst such as an acid-base compound or a metal compound is used, film formation is extremely slow.

Also, when a catalyst is used in film formation to a thickness of at least several tens of microns from a compound having many organoxy groups, cracks tend to arise as the hydrolytic condensation reactions proceed and, because the crosslink density is too high, the film tends to cloud.

With regard to these points, the organoxysilane compound described in Patent Document 1 gives rise to a secondary amine as the hydrolytic condensation reaction proceeds, which secondary amine functions as a basic catalyst, leading to film formation. Film formation without the addition of a catalyst is thus possible. However, owing to the influence of steric hindrance by the silyl group to which a dialkylamino group is partially bonded, not only does the hydrolytic condensation reaction have difficulty arising, the dialkylamine that forms has a low molecular weight and readily volatilizes. Hence, there is a desire for the film-forming time to be shortened.

In addition, the organoxy group and the amino group are eliminated by the hydrolytic condensation reaction and so, as with compounds having many organoxy groups, the problems that cracks tend to arise as the hydrolytic condensation reaction proceeds and that the crosslink density becomes too high, leading to clouding of the film, remain unresolved.

The present invention was arrived at in light of the above circumstances. An object of this invention is to provide bissilyl compounds which are capable of rapid film formation without a catalyst and which give films in which cracks and clouding do not readily arise. Other objects include providing a method for preparing such compounds, and providing compositions and cured products containing such compounds.

### SOLUTION TO PROBLEM

The inventors have conducted intensive investigations aimed at achieving the above objects, finding as a result that by having an organoxysilylalkylamino group on a silicon atom, the effect of steric hindrance is small, the silyl group substituted with an organoxysilylalkylamino group is rapidly hydrolyzed and the primary aminoalkylorganoxysilane compound that forms due to hydrolysis becomes a catalyst and a reactant, promoting a hydrolytic condensation reaction with a bissilyl compound. This led to the discovery of bissilyl compounds having a silyl group substituted with an organoxysilylalkylamino group that are capable of rapidly forming a film without a catalyst, which discovery ultimately led to the present invention.

Accordingly, this invention provides:
1. A bissilyl compound which has a silyl group substituted with an organoxysilylalkylamino group and is represented by general formula (1) below 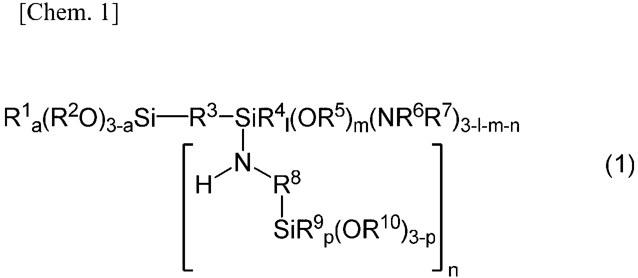 (wherein R¹, R², R⁴ to R⁷, R⁹ and R¹⁰ are each independently an unsubstituted monovalent hydrocarbon group of 1 to 10 carbon atoms and R⁶ and R⁷ may be mutually bonded and form together with the nitrogen atom to which they are linked a ring structure of 2 to 10 carbon atoms, which ring structure may include as part of the ring, aside from said nitrogen atom, at least one element selected from the group consisting of O and N; R³ and R⁸ are each independently a divalent hydrocarbon group of 2 to 10 carbon atoms which may include at least one element selected from the group consisting of O, N, S and Si; 'a' is 0, 1 or 2, '1' and 'm' are each 0, 1 or 2; 'n' is 1, 2 or 3; and 'p' is 0, 1 or 2);
2. A composition which includes the bissilyl compound having a silyl group substituted with an organoxysilylalkylamino group of 1 above and an amino group-containing organoxysilane compound of general formula (2) below 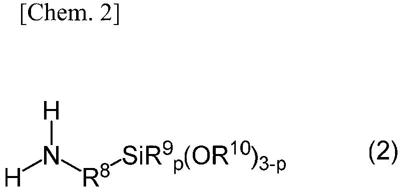 (wherein R⁸ to R¹⁰ and p are as defined above);
3. A composition which includes the bissilyl compound having a silyl group substituted with an organoxysilylalkylamino group of 1 above and an aprotic solvent;
4. The composition of 2 above, further including an aprotic solvent;
5. A method for preparing the bissilyl compound having a silyl group substituted with an organoxysilylalkylamino group of 1 above, which method includes the step of carrying out an amine exchange reaction between a primary aminoalkylorganoxysilane compound of general formula (2) 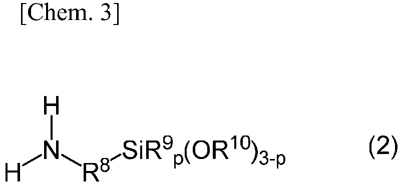
   (wherein R⁸ to R¹⁰ and p are as defined above) and a bissilyl compound of general formula (3) below
      [Chem. 4]

      R¹ₐ(R²O)₃₋ₐSi-R³-SiR⁴ₗ(OR⁵)ₘ(NR⁶R⁷)₃₋ₗ₋ₘ (3)
   (wherein R¹ to R⁷, a, l and m are as defined above) in the presence of an acidic compound of pKa 4 to 12 and a polar aprotic solvent;
6. The method for preparing a bissilyl compound having a silyl group substituted with an organoxysilylalkylamino group according to 5 above, further including the step of neutralizing the acidic compound with a solid basic compound;
7. The method for preparing a bissilyl compound having a silyl group substituted with an organoxysilylalkylamino group according to 5 or 6 above, wherein the acidic compound of pKa 4 to 12 is an amine salt;
8. The method for preparing a bissilyl compound having a silyl group substituted with an organoxysilylalkylamino group according to 5 or 6 above, wherein the polar aprotic solvent is a nitrile compound; and
9. A cured product obtained by curing the compound of 1 above or the composition of 2 above.

### ADVANTAGEOUS EFFECTS OF INVENTION

The inventive bissilyl compound having a silyl group substituted with an organoxysilylalkylamino group can rapidly form a film even without the separate addition of a catalyst. In addition, the resulting film does not give rise to cracks or clouding, and exhibits a high hardness.

### BRIEF DESCRIPTION OF DRAWINGS

- [FIG. 1]: FIG. 1 shows an IR spectrum of Compound 1 obtained in Example 1.
- [FIG. 2]: FIG. 2 shows an ¹H-NMR spectrum of Compound 1 obtained in Example 1.
- [FIG. 3]: FIG. 3 shows an IR spectrum of Compound 2 obtained in Example 2.
- [FIG. 4]: FIG. 4 shows an ¹H-NMR spectrum of Compound 2 obtained in Example 2.
- [FIG. 5]: FIG. 5 shows an IR spectrum of Compound 3 obtained in Example 3.
- [FIG. 6]: FIG. 6 shows an ¹H-NMR spectrum of Compound 3 obtained in Example 3.
- [FIG. 7]: FIG. 7 shows an IR spectrum of Compound 4 obtained in Example 4.
- [FIG. 8]: FIG. 8 shows an ¹H-NMR spectrum of Compound 4 obtained in Example 4.
- [FIG. 9]: FIG. 9 shows an IR spectrum of Compound 5 obtained in Example 5.
- [FIG. 10]: FIG. 10 shows an ¹H-NMR spectrum of Compound 5 obtained in Example 5.
- [FIG. 11]: FIG. 11 shows an IR spectrum of Compound 6 obtained in Example 6.
- [FIG. 12]: FIG. 12 shows an ¹H-NMR spectrum of Compound 6 obtained in Example 6.
- [FIG. 13]: FIG. 13 shows an IR spectrum of Compound 7 obtained in Example 7.
- [FIG. 14]: FIG. 14 shows an ¹H-NMR spectrum of Compound 7 obtained in Example 7.
- [FIG. 15]: FIG. 15 shows an IR spectrum of Compound 8 obtained in Example 8.
- [FIG. 16]: FIG. 16 shows an ¹H-NMR spectrum of Compound 8 obtained in Example 8.

### DESCRIPTION OF EMBODIMENTS

### [1] Bissilyl Compound Having Silyl Group Substituted with Organoxysilylalkylamino Group

The inventive bissilyl compound having a silyl group substituted with an organoxysilylalkylamino group (referred to below as "Compound (1)") is represented by general formula (1) below.

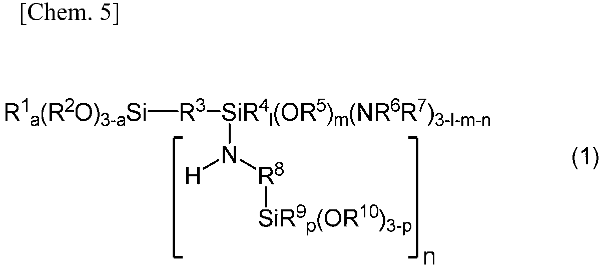

In general formula (1), R¹, R², R⁴ to R⁷, R⁹ and R¹⁰ are each independently an unsubstituted monovalent hydrocarbon group of 1 to 10 carbon atoms, preferably 1 to 6 carbon atoms, and even more preferably 1 to 3 carbon atoms.

The monovalent hydrocarbon groups of R¹, R², R⁴ to R⁷, R⁹ and R¹⁰ may be linear, branched or cyclic. Specific examples include linear alkyl groups such as methyl, ethyl, n-propyl, n-butyl, n-pentyl, n-hexyl, n-heptyl, n-octyl and decyl groups; branched alkyl groups such as isopropyl, isobutyl, sec-butyl, tert-butyl, neopentyl, thexyl and 2-ethylhexyl groups; cyclic alkyl groups such as cyclopentyl and cyclohexyl groups; alkenyl groups such as vinyl, allyl, 1-propenyl, butenyl and pentenyl groups; aryl groups such as phenyl and tolyl groups; and aralkyl groups such as benzyl and phenethyl groups.

Of these, in terms of the ease of procuring the starting materials, R¹, R², R⁴, R⁵, R⁹ and R¹⁰ are preferably methyl, ethyl, isopropyl and phenyl groups. From the standpoint of the ease of procuring the starting materials and enabling the touch-dry time to be shortened, R⁶ and R⁷ are preferably methyl and ethyl groups.

R⁶ and R⁷ may be mutually bonded and form together with the nitrogen atom to which they are linked a ring structure having from 2 to 10 carbon atoms. This ring structure may include on part of the ring, aside from said nitrogen atom, at least one element selected from the group consisting of O and N.

Specific examples of such ring structures include pyrrolidine, piperidine, piperazine, N-methylpiperazine and morpholine rings.

In general formula (1), R³ and R⁸ are each independently a divalent hydrocarbon group of 2 to 10 carbon atoms, preferably 2 to 8 carbon atoms, and more preferably 2 to 6 carbon atoms, which may include at least one element selected from the group of O, N, S, and Si.

The divalent hydrocarbon groups of R³ and R⁸ may be linear, branched or cyclic. Specific examples include linear alkylene groups such as ethylene, trimethylene, tetramethylene, hexamethylene, octamethylene and decylene groups; branched alkylene groups such as methyltrimethylene and methyltetramethylene groups; cyclic alkylene groups such as cyclohexylene and methylenecyclohexylenemethylene groups; linear alkenylene groups such as butenylene, hexenylene and octenylene groups; branched alkenylene groups such as the isobutenylene group; arylene groups such as the phenylene group; and aralkylene groups such as the methylenephenylene and methylenephenylenemethylene groups.

Of these, from the standpoint of the ease of procuring the starting materials and the hardness of the film that is obtained, R³ and R⁸ are preferably linear alkylene groups or aralkylene groups of 2 to 8 carbon atoms.

The divalent hydrocarbon groups containing at least one element selected from the group consisting of O, N, S and Si represented by R³ and R⁸ are exemplified by alkyleneoxyalkylene groups, alkyleneaminoalkylene groups, alkylenethioalkylene groups and alkylenedialkylsilylalkylene groups.

In particular, when R³ includes Si, R³ may have the polydialkylsiloxanyl group of general formula (4) below or the group including the cyclic siloxane structure of general formula (5) below.

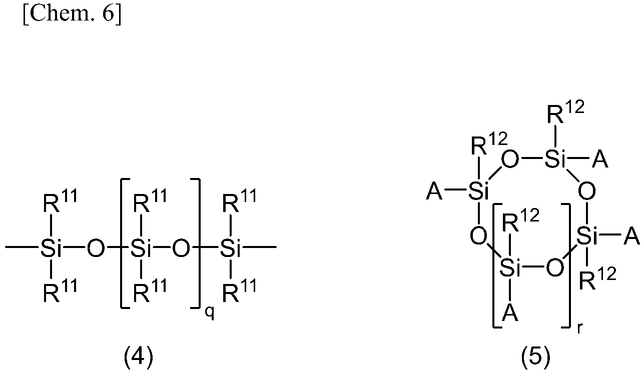

In general formula (4), each R¹¹ is independently a substituted or unsubstituted monovalent hydrocarbon group of 1 to 10 carbon atoms, preferably 1 to 6 carbon atoms, and more preferably 1 to 3 carbon atoms.

The monovalent hydrocarbon group of R¹¹ may be linear, branched or cyclic. Specific examples include linear alkyl groups such as methyl, ethyl, n-propyl, n-butyl, n-pentyl, n-hexyl, n-heptyl, n-octyl and decyl groups; branched alkyl groups such as isopropyl, isobutyl, sec-butyl, tert-butyl, neopentyl, thexyl and 2-ethylhexyl groups; cyclic alkyl groups such as cyclopentyl and cyclohexyl groups; alkenyl groups such as vinyl, allyl, propenyl, butenyl and pentenyl groups; aryl groups such as phenyl and tolyl groups; and aralkyl groups such as benzyl and phenethyl groups.

Of these, from the standpoint of the ease of procuring the starting materials, R¹¹ is preferably a linear alkyl group, an alkenyl group or an aryl group.

Some or all of the hydrogen atoms on the monovalent hydrocarbon group of R¹¹ may be substituted with fluorine atoms. Specific examples of fluorine atom-substituted monovalent hydrocarbon groups include fluoroalkyl groups such as 3,3,3-trifluoropropyl, 3,3,4,4,5,5,6,6,6-nonafluorohexyl and 3,3,4,4,5,5,6,6,7,7,8,8,8-tridecafluorooctyl groups.

In general formula (4), q may be any integer. However, from the standpoint of the hardness of the film, q is an integer that is preferably from 0 to 100, more preferably from 0 to 80, and even more preferably form 0 to 40.

In general formula (5), each R¹² is independently a substituted or unsubstituted monovalent hydrocarbon group of 1 to 10 carbon atoms, preferably 1 to 6 carbon atoms, and more preferably 1 to 3 carbon atoms. The monovalent hydrocarbon group of R¹² is exemplified by the same substituents as R¹¹.

In general formula (5), two occurrences of A are each independently a substituted or unsubstituted monovalent hydrocarbon group of 1 to 10 carbon atoms, preferably 1 to 6 carbon atoms, and more preferably 1 to 3 carbon atoms, an organooxy group, a trialkoxysilylalkyl group, an alkyldialkoxysilylalkyl group or a dialkylalkoxysilylalkyl group. The remaining two occurrences of A are substituted or unsubstituted divalent hydrocarbon groups of 1 to 9 carbon atoms, preferably 1 to 6 carbon atoms, and more preferably 1 to 3 carbon atoms (provided that the total number of carbon atoms is from 2 to 10), and these bond to the silicon atoms on both sides of R³. The monovalent hydrocarbon groups are exemplified by the same substituents as in R¹¹. The divalent hydrocarbon groups are exemplified by, in addition to the groups mentioned as examples in the description of R³, a methylene group.

The number of carbon atoms on the two groups among R¹¹, R¹² and A above that do not bond to the silicon atoms on both sides of R³ are not included in the above-mentioned number of carbon atoms on R³.

When A is an organoxy group, specific examples include alkoxy groups of 1 to 3 carbon atoms, such as methoxy, ethoxy, propoxy and isopropoxy groups.

When A is a trialkoxysilylalkyl group, specific examples include trimethoxysilylethyl, trimethoxysilylpropyl, trimethoxysilylhexyl, trimethoxysilyloctyl, triethoxysilylethyl, triethoxysilylpropyl, triethoxysilylhexyl and triethoxysilyloctyl groups.

When A is an alkyldialkoxysilylalkyl group, specific examples include methyldimethoxysilylethyl, methyldimethoxysilylpropyl, methyldimethoxysilylhexyl, methyldimethoxysilyloctyl, methyldiethoxysilylethyl, methyldiethoxysilylpropyl, methyldiethoxysilylhexyl, methyldiethoxysilyloctyl, methoxymethyldimethoxysilylethyl, ethoxymethyldiethoxysilylethyl and phenyldimethoxysilyl groups.

When A is a dialkylalkoxysilylalkyl group, specific examples include dimethylmethoxysilylethyl, methylphenylmethoxysilylethyl, dimethylethoxysilylethyl, methylphenylethoxysilylethyl, dimethylmethoxysilylhexyl, dimethylmethoxysilyloctyl, dimethylethoxysilylhexyl and dimethylethoxysilyloctyl groups.

In general formula (5), the subscript 'r' may be any integer but is preferably an integer from 0 to 5, more preferably from 1 to 5, and even more preferably from 1 to 3. When r is too large, there is a possibility that sufficient hardness will not be attained when the film has been formed.

In general formula (1), the subscript 'a' represents 0, 1 or 2. From the standpoint of the curing time for the product and the hardness of the film obtained, 0 or 1 is preferred.

The subscripts '1' and 'm' each represent 0, 1 or 2. From the standpoint of the curability of the product and the hardness of the film obtained, 0 or 1 is preferred.

The subscript 'n' represents 1, 2 or 3. From the standpoint of the curability of the product and the hardness of the film obtained, 1 or 2 is preferred.

The subscript 'p' represents 0, 1 or 2. From the standpoint of the curability of the product and the hardness of the film obtained, 0 or 1 is preferred.

Specific examples of Compound (1) include
1-methyldimethoxysilyl-2-(dimethylamino)(trimethoxysilylpropylamino)methylsilylethylene,
1-methyldimethoxysilyl-2-(dimethylamino)(methyldimethoxysilylpropylamino)-methylsilylethylene,
1-methyldimethoxysilyl-2-(dimethylamino)(triethoxysilylpropylamino)methylsilylethylene,
1-methyldimethoxysilyl-2-(dimethylamino)(methyldiethoxysilylpropylamino)-methylsilylethylene,
1-methyldimethoxysilyl-6-(dimethylamino)(trimethoxysilylpropylamino)methylsilylhexane,
1-methyldimethoxysilyl-6-(dimethylamino)(methyldimethoxysilylpropylamino)-methylsilylhexane,
1-methyldimethoxysilyl-6-(dimethylamino)(triethoxysilylpropylamino)methylsilylhexane,
1-methyldimethoxysilyl-6-(dimethylamino)(methyldiethoxysilylpropylamino)-methylsilylhexane,
1-methyldimethoxysilyl-8-(dimethylamino)(trimethoxysilylpropylamino)methylsilyloctane,
1-methyldimethoxysilyl-8-(dimethylamino)(methyldimethoxysilylpropylamino)-methylsilyloctane,
1-methyldimethoxysilyl-8-(dimethylamino)(triethoxysilylpropylamino)methylsilyloctane,
1-methyldimethoxysilyl-8-(dimethylamino)(methyldiethoxysilylpropylamino)-methylsilyloctane,
1-methyldimethoxysilyl-2-(diethylamino)(trimethoxysilylpropylamino)methylsilylethylene,
1-methyldimethoxysilyl-2-(diethylamino)(methyldimethoxysilylpropylamino)-methylsilylethylene,
1-methyldimethoxysilyl-2-(diethylamino)(triethoxysilylpropylamino)methylsilylethylene,
1-methyldimethoxysilyl-2-(diethylamino)(methyldiethoxysilylpropylamino)-methylsilylethylene,
1-methyldimethoxysilyl-6-(diethylamino)(trimethoxysilylpropylamino)methylsilylhexane,
1-methyldimethoxysilyl-6-(diethylamino)(methyldimethoxysilylpropylamino)-methylsilylhexane,
1-methyldimethoxysilyl-6-(diethylamino)(triethoxysilylpropylamino)methylsilylhexane,
1-methyldimethoxysilyl-6-(diethylamino)(methyldiethoxysilylpropylamino)methylsilylhexane,
1-methyldimethoxysilyl-8-(diethylamino)(trimethoxysilylpropylamino)methylsilyloctane,
1-methyldimethoxysilyl-8-(diethylamino)methyldimethoxysilylpropylamino)-methylsilyloctane,
1-methyldimethoxysilyl-8-(diethylamino)(triethoxysilylpropylamino)methylsilyloctane,
1-methyldimethoxysilyl-8-(diethylamino)(methyldiethoxysilylpropylamino)methylsilyloctane,
1-methyldimethoxysilyl-2-(4-methylpiperazin-1-yl)(trimethoxysilylpropylamino)-methylsilylethylene,
1-methyldimethoxysilyl-2-(4-methylpiperazin-1-yl)(methyldimethoxysilylpropylamino)-methylsilylethylene,
1-methyldimethoxysilyl-2-(4-methylpiperazin-1-yl)(triethoxysilylpropylamino)-methylsilylethylene,
1-methyldimethoxysilyl-2-(4-methylpiperazin-1-yl)(methyldiethoxysilylpropylamino)-methylsilylethylene,
1-methyldimethoxysilyl-6-(4-methylpiperazin-1-yl)(trimethoxysilylpropylamino)-methylsilylhexane,
1-methyldimethoxysilyl-6-(4-methylpiperazin-1-yl)(methyldimethoxysilylpropylamino)-methylsilylhexane,
1-methyldimethoxysilyl-6-(4-methylpiperazin-1-yl)(triethoxysilylpropylamino)-methylsilylhexane,
1-methyldimethoxysilyl-6-(4-methylpiperazin-1-yl)(methyldiethoxysilylpropylamino)-methylsilylhexane,
1-methyldimethoxysilyl-8-(4-methylpiperazin-1-yl)(trimethoxysilylpropylamino)-methylsilyloctane,
1-methyldimethoxysilyl-8-(4-methylpiperazin-1-yl)(methyldimethoxysilylpropylamino)-methylsilyloctane,
1-methyldimethoxysilyl-8-(4-methylpiperazin-1-yl)(triethoxysilylpropylamino)-methylsilyloctane,
1-methyldimethoxysilyl-8-(4-methylpiperazin-1-yl)(methyldiethoxysilylpropylamino)-methylsilyloctane,
1-trimethoxysilyl-2-(dimethylamino)(trimethoxysilylpropylamino)methylsilylethylene,
1-trimethoxysilyl-2-(dimethylamino)(methyldimethoxysilylpropylamino)methylsilylethylene,
1-trimethoxysilyl-2-(dimethylamino)(triethoxysilylpropylamino)methylsilylethylene,
1-trimethoxysilyl-2-(dimethylamino)(methyldiethoxysilylpropylamino)methylsilylethylene,
1-trimethoxysilyl-6-(dimethylamino)(trimethoxysilylpropylamino)methylsilylhexane,
1-trimethoxysilyl-6-(dimethylamino)(methyldimethoxysilylpropylamino)methylsilylhexane,
1-trimethoxysilyl-6-(dimethylamino)(triethoxysilylpropylamino)methylsilylhexane,
1-trimethoxysilyl-6-(dimethylamino)(methyldiethoxysilylpropylamino)methylsilylhexane,
1-trimethoxysilyl-8-(dimethylamino)(trimethoxysilylpropylamino)methylsilyloctane,
1-trimethoxysilyl-8-(dimethylamino)(methyldimethoxysilylpropylamino)methylsilyloctane,
1-trimethoxysilyl-8-(dimethylamino)(triethoxysilylpropylamino)methylsilyloctane,
1-trimethoxysilyl-8-(dimethylamino)(methyldiethoxysilylpropylamino)methylsilyloctane,
1-trimethoxysilyl-2-(diethylamino)(trimethoxysilylpropylamino)methylsilylethylene,
1-trimethoxysilyl-2-(diethylamino)(methyldimethoxysilylpropylamino)methylsilylethylene,
1-trimethoxysilyl-2-(diethylamino)(triethoxysilylpropylamino)methylsilylethylene,
1-trimethoxysilyl-2-(diethylamino)(methyldiethoxysilylpropylamino)methylsilylethylene,
1-trimethoxysilyl-6-(diethylamino)(trimethoxysilylpropylamino)methylsilylhexane,
1-trimethoxysilyl-6-(diethylamino)(methyldimethoxysilylpropylamino)methylsilylhexane,
1-trimethoxysilyl-6-(diethylamino)(triethoxysilylpropylamino)methylsilylhexane,
1-trimethoxysilyl-6-(diethylamino)(methyldiethoxysilylpropylamino)methylsilylhexane,
1-trimethoxysilyl-8-(diethylamino)(trimethoxysilylpropylamino)methylsilyloctane,
1-trimethoxysilyl-8-(diethylamino)(methyldimethoxysilylpropylamino)methylsilyloctane,
1-trimethoxysilyl-8-(diethylamino)(triethoxysilylpropylamino)methylsilyloctane,
1-trimethoxysilyl-8-(diethylamino)(methyldiethoxysilylpropylamino)methylsilyloctane,
1-trimethoxysilyl-2-(4-methylpiperazin-1-yl)(trimethoxysilylpropylamino)methylsilylethylene,
1-trimethoxysilyl-2-(4-methylpiperazin-1-yl)(methyldimethoxysilylpropylamino)-methylsilylethylene,
1-trimethoxysilyl-2-(4-methylpiperazin-1-yl)(triethoxysilylpropylamino)methylsilylethylene,
1-trimethoxysilyl-2-(4-methylpiperazin-1-yl)(methyldiethoxysilylpropylamino)-methylsilylethylene,
1-trimethoxysilyl-6-(4-methylpiperazin-1-yl)(trimethoxysilylpropylamino)methylsilylhexane,
1-trimethoxysilyl-6-(4-methylpiperazin-1-yl)(methyldimethoxysilylpropylamino)-methylsilylhexane,
1-trimethoxysilyl-6-(4-methylpiperazin-1-yl)(triethoxysilylpropylamino)methylsilylhexane,
1-trimethoxysilyl-6-(4-methylpiperazin-1-yl)(methyldiethoxysilylpropylamino)-methylsilylhexane,
1-trimethoxysilyl-8-(4-methylpiperazin-1-yl)(trimethoxysilylpropylamino)methylsilyloctane,
1-trimethoxysilyl-8-(4-methylpiperazin-1-yl)(methyldimethoxysilylpropylamino)-methylsilyloctane,
1-trimethoxysilyl-8-(4-methylpiperazin-1-yl)(triethoxysilylpropylamino)methylsilyloctane,
1-trimethoxysilyl-8-(4-methylpiperazin-1-yl)(methyldiethoxysilylpropylamino)-methylsilyloctane,
1-trimethoxysilyl-2-(diethylamino)(trimethoxysilylpropylamino)methylsilylethylene,
1-trimethoxysilyl-2-(diethylamino)(methyldimethoxysilylpropylamino)methylsilylethylene,
1-trimethoxysilyl-2-(diethylamino)(triethoxysilylpropylamino)methylsilylethylene,
1-trimethoxysilyl-2-(diethylamino)(methyldiethoxysilylpropylamino)methylsilylethylene,
1-trimethoxysilyl-6-(diethylamino)(trimethoxysilylpropylamino)methylsilylhexane,
1-trimethoxysilyl-6-(diethylamino)(methyldimethoxysilylpropylamino)methylsilylhexane,
1-trimethoxysilyl-6-(diethylamino)(triethoxysilylpropylamino)methylsilylhexane,
1-trimethoxysilyl-6-(diethylamino)(methyldiethoxysilylpropylamino)methylsilylhexane,
1-trimethoxysilyl-8-(diethylamino)(trimethoxysilylpropylamino)methylsilyloctane,
1-trimethoxysilyl-8-(diethylamino)(methyldimethoxysilylpropylamino)methylsilyloctane,
1-trimethoxysilyl-8-(diethylamino)(triethoxysilylpropylamino)methylsilyloctane,
1-trimethoxysilyl-8-(diethylamino)(methyldiethoxysilylpropylamino)methylsilyloctane,
1-triethoxysilyl-2-(diethylamino)(trimethoxysilylpropylamino)methylsilylethylene,
1-triethoxysilyl-2-(diethylamino)(methyldimethoxysilylpropylamino)methylsilylethylene,
1-triethoxysilyl-2-(diethylamino)(triethoxysilylpropylamino)methylsilylethylene,
1-triethoxysilyl-2-(diethylamino)(methyldiethoxysilylpropylamino)methylsilylethylene,
1-triethoxysilyl-6-(diethylamino)(trimethoxysilylpropylamino)methylsilylhexane,
1-triethoxysilyl-6-(diethylamino)(methyldimethoxysilylpropylamino)methylsilylhexane,
1-triethoxysilyl-6-(diethylamino)(triethoxysilylpropylamino)methylsilylhexane,
1-triethoxysilyl-6-(diethylamino)(methyldiethoxysilylpropylamino)methylsilylhexane,
1-triethoxysilyl-8-(diethylamino)(trimethoxysilylpropylamino)methylsilyloctane,
1-triethoxysilyl-8-(diethylamino)(methyldimethoxysilylpropylamino)methylsilyloctane,
1-triethoxysilyl-8-(diethylamino)(triethoxysilylpropylamino)methylsilyloctane,
1-triethoxysilyl-8-(diethylamino)(methyldiethoxysilylpropylamino)methylsilyloctane,
1-methyldiethoxysilyl-2-(diethylamino)(trimethoxysilylpropylamino)methylsilylethylene,
1-methyldiethoxysilyl-2-(diethylamino)(methyldimethoxysilylpropylamino)-methylsilylethylene,
1-methyldiethoxysilyl-2-(diethylamino)(triethoxysilylpropylamino)methylsilylethylene,
1-methyldiethoxysilyl-2-(diethylamino)(methyldiethoxysilylpropylamino)methylsilylethylene,
1-methyldiethoxysilyl-6-(diethylamino)(trimethoxysilylpropylamino)methylsilylhexane,
1-methyldiethoxysilyl-6-(diethylamino)(methyldimethoxysilylpropylamino)methylsilylhexane,
1-methyldiethoxysilyl-6-(diethylamino)(triethoxysilylpropylamino)methylsilylhexane,
1-methyldiethoxysilyl-6-(diethylamino)(methyldiethoxysilylpropylamino)methylsilylhexane,
1-methyldiethoxysilyl-8-(diethylamino)(trimethoxysilylpropylamino)methylsilyloctane,
1-methyldiethoxysilyl-8-(diethylamino)(methyldimethoxysilylpropylamino)methylsilyloctane,
1-methyldiethoxysilyl-8-(diethylamino)(triethoxysilylpropylamino)methylsilyloctane,
1-methyldiethoxysilyl-8-(diethylamino)(methyldiethoxysilylpropylamino)methylsilyloctane, trimethoxysilylmethyl-(diethylamino)(trimethoxysilylpropylamino)methylethylsulfide, trimethoxysilylmethyl-(diethylamino)(methyldimethoxysilylpropylamino)methylethylsulfide, trimethoxysilylmethyl-(diethylamino)(triethoxysilylpropylamino)methylethylsulfide, trimethoxysilylmethyl-(diethylamino)(methyldiethoxysilylpropylamino)methylethylsulfide, trimethoxysilylpropyl(diethylamino)(trimethoxysilylpropylamino)methylethylsulfide, trimethoxysilylpropyl(diethylamino)(methyldimethoxysilylpropylamino)methylethylsulfide, trimethoxysilylpropyl(diethylamino)(triethoxysilylpropylamino)methylethylsulfide, trimethoxysilylpropyl(diethylamino)(methyldiethoxysilylpropylamino)methylethylsulfide, methyldimethoxysilylpropyl(diethylamino)(trimethoxysilylpropylamino)methylethylsulfide, methyldimethoxysilylpropyl(diethylamino)(methyldimethoxysilylpropylamino)-methylethylsulfide,
methyldimethoxysilylpropyl(diethylamino)(triethoxysilylpropylamino)methylethylsulfide, methyldimethoxysilylpropyl(diethylamino)(methyldiethoxysilylpropylamino)-methylethylsulfide,
trimethoxysilyloctyl(diethylamino)(trimethoxysilylpropylamino)methylethylsulfide,
trimethoxysilyloctyl(diethylamino)(methyldimethoxysilylpropylamino)methylethylsulfide,
trimethoxysilyloctyl(diethylamino)(triethoxysilylpropylamino)methylethylsulfide,
trimethoxysilyloctyl(diethylamino)(methyldiethoxysilylpropylamino)methylethylsulfide,
1-trimethoxysilylethyldimethylsilyl-2-(diethylamino)(trimethoxysilylpropylamino)-methylsilylethyldimethylsilylbenzene,
1-trimethoxysilylethyldimethylsilyl-3-(diethylamino)(trimethoxysilylpropylamino)-methylsilylethyldimethylsilylbenzene,
1-trimethoxysilylethyldimethylsilyl-4-(diethylamino)(trimethoxysilylpropylamino)-methylsilylethyldimethylsilylbenzene,
1-trimethoxysilylethyldimethylsilyl-2-(diethylamino)(methyldimethoxysilylpropylamino)-methylsilylethyldimethylsilylbenzene,
1-trimethoxysilylethyldimethylsilyl-3-(diethylamino)(methyldimethoxysilylpropylamino)-methylsilylethyldimethylsilylbenzene,
1-trimethoxysilylethyldimethylsilyl-4-(diethylamino)(methyldimethoxysilylpropylamino)-methylsilylethyldimethylsilylbenzene,
1-trimethoxysilylethyldimethylsilyl-2-(diethylamino)(triethoxysilylpropylamino)-methylsilylethyldimethylsilylbenzene,
1-trimethoxysilylethyldimethylsilyl-3-(diethylamino)(triethoxysilylpropylamino)-methylsilylethyldimethylsilylbenzene,
1-trimethoxysilylethyldimethylsilyl-4-(diethylamino)(triethoxysilylpropylamino)-methylsilylethyldimethylsilylbenzene,
1-trimethoxysilylethyldimethylsilyl-2-(diethylamino)(methyldiethoxysilylpropylamino)-methylsilylethyldimethylsilylbenzene,
1-trimethoxysilylethyldimethylsilyl-3-(diethylamino)(methyldiethoxysilylpropylamino)-methylsilylethyldimethylsilylbenzene,
1-trimethoxysilylethyldimethylsilyl-4-(diethylamino)(methyldiethoxysilylpropylamino)-methylsilylethyldimethylsilylbenzene,
1-methyldimethoxysilylethyldimethylsilyl-2-(diethylamino)(trimethoxysilylpropylamino)-methylsilylethyldimethylsilylbenzene,
1-methyldimethoxysilylethyldimethylsilyl-3-(diethylamino)(trimethoxysilylpropylamino)-methylsilylethyldimethylsilylbenzene,
1-methyldimethoxysilylethyldimethylsilyl-4-(diethylamino)(trimethoxysilylpropylamino)-methylsilylethyldimethylsilylbenzene,
1-methyldimethoxysilylethyldimethylsilyl-2-(diethylamino)(methyldimethoxysilylpropyl-amino)methylsilylethyldimethylsilylbenzene,
1-methyldimethoxysilylethyldimethylsilyl-3-(diethylamino)(methyldimethoxysilylpropyl-amino)methylsilylethyldimethylsilylbenzene,
1-methyldimethoxysilylethyldimethylsilyl-4-(diethylamino)(methyldimethoxysilylpropyl-amino)methylsilylethyldimethylsilylbenzene,
1-methyldimethoxysilylethyldimethylsilyl-2-(diethylamino)(triethoxysilylpropylamino)-methylsilylethyldimethylsilylbenzene,
1-methyldimethoxysilylethyldimethylsilyl-3-(diethylamino)(triethoxysilylpropylamino)-methylsilylethyldimethylsilylbenzene,
1-methyldimethoxysilylethyldimethylsilyl-4-(diethylamino)(triethoxysilylpropylamino)-methylsilylethyldimethylsilylbenzene,
1-methyldimethoxysilylethyldimethylsilyl-2-(diethylamino)(methyldiethoxysilylpropyl-amino)methylsilylethyldimethylsilylbenzene,
1-methyldimethoxysilylethyldimethylsilyl-3-(diethylamino)(methyldiethoxysilylpropyl-amino)methylsilylethyldimethylsilylbenzene,
1-methyldimethoxysilylethyldimethylsilyl-4-(diethylamino)(methyldiethoxysilylpropyl-amino)methylsilylethyldimethylsilylbenzene,
1-trimethoxysilylethyl-3-(diethylamino)(trimethoxysilylpropylamino)methylsilylethyl-1,1,3,3-tetramethyldisiloxane,
1-trimethoxysilylethyl-3-(diethylamino)(methyldimethoxysilylpropylamino)methylsilylethyl-1,1,3,3-tetramethyldisiloxane,
1-trimethoxysilylethyl-3-(diethylamino)(triethoxysilylpropylamino)methylsilylethyl-1,1,3,3-tetramethyldisiloxane,
1-trimethoxysilylethyl-3-(diethylamino)(methyldiethoxysilylpropylamino)methylsilylethyl-1,1,3,3-tetramethyldisiloxane,
1-trimethoxysilylethyl-9-(diethylamino)(trimethoxysilylpropylamino)methylsilylethyl-1,1,3,3,5,5,7,7,9,9-decamethylpentasiloxane,
1-trimethoxysilylethyl-9-(diethylamino)(methyldimethoxysilylpropylamino)methylsilylethyl-1,1,3,3,5,5,7,7,9,9-decamethylpentasiloxane,
1-trimethoxysilylethyl-9-(diethylamino)(triethoxysilylpropylamino)methylsilylethyl-1,1,3,3,5,5,7,7,9,9-decamethylpentasiloxane,
1-trimethoxysilylethyl-9-(diethylamino)(methyldiethoxysilylpropylamino)methylsilylethyl-1,1,3,3,5,5,7,7,9,9-decamethylpentasiloxane,
(α-trimethoxysilylethyl-ω-(diethylamino)(trimethoxysilylpropylamino)methylsilylethyl-polydimethylpolysiloxane,
(α-trimethoxysilylethyl-ω-(diethylamino)(methyldimethoxysilylpropylamino)methyl-silylethyl-polydimethylpolysiloxane,
(α-trimethoxysilylethyl-ω-(diethylamino)(triethoxysilylpropylamino)methylsilylethyl-polydimethylpolysiloxane,
(α-trimethoxysilylethyl-ω-(diethylamino)(methyldiethoxysilylpropylamino)methylsilylethyl-polydimethylpolysiloxane,
1-trimethoxysilylethyl-3-(diethylamino)(trimethoxysilylpropylamino)methylsilylethyl-1,3,5,5,7,7-hexamethylcyclotetrasiloxane,
1-trimethoxysilylethyl-5-(diethylamino)(trimethoxysilylpropylamino)methylsilylethyl-1,3,3,5,7,7-hexamethylcyclotetrasiloxane,
1-trimethoxysilylethyl-3-(diethylamino)(methyldimethoxysilylpropylamino)methylsilylethyl-1,3,5,5,7,7-hexamethylcyclotetrasiloxane,
1-trimethoxysilylethyl-5-(diethylamino)(methyldimethoxysilylpropylamino)methylsilylethyl-1,3,3,5,7,7-hexamethylcyclotetrasiloxane,
1-trimethoxysilylethyl-3-(diethylamino)(triethoxysilylpropylamino)methylsilylethyl-1,3,5,5,7,7-hexamethylcyclotetrasiloxane,
1-trimethoxysilylethyl-5-(diethylamino)(triethoxysilylpropylamino)methylsilylethyl-1,3,3,5,7,7-hexamethylcyclotetrasiloxane,
1-trimethoxysilylethyl-3-(diethylamino)(methyldiethoxysilylpropylamino)methylsilylethyl-1,3,5,5,7,7-hexamethylcyclotetrasiloxane,
1-trimethoxysilylethyl-5-(diethylamino)(methyldiethoxysilylpropylamino)methylsilylethyl-1,3,3,5,7,7-hexamethylcyclotetrasiloxane,
1-trimethoxysilylethyl-3-(diethylamino)(trimethoxysilylpropylamino)methylsilylethyl-5,7-dipropyl-1,3,5,7-tetramethylcyclotetrasiloxane,
1-trimethoxysilylethyl-5-(diethylamino)(trimethoxysilylpropylamino)methylsilylethyl-3,7-dipropyl-1,3,5,7-tetramethylcyclotetrasiloxane,
1-trimethoxysilylethyl-3-(diethylamino)(methyldimethoxysilylpropylamino)methylsilylethyl-5,7-dipropyl-1,3,5,7-tetramethylcyclotetrasiloxane,
1-trimethoxysilylethyl-5-(diethylamino)(methyldimethoxysilylpropylamino)methylsilylethyl-3,7-dipropyl-1,3,5,7-tetramethylcyclotetrasiloxane,
1-trimethoxysilylethyl-3-(diethylamino)(triethoxysilylpropylamino)methylsilylethyl-5,7-dipropyl-1,3,5,7-tetramethylcyclotetrasiloxane,
1-trimethoxysilylethyl-5-(diethylamino)(triethoxysilylpropylamino)methylsilylethyl-3,7-dipropyl-1,3,5,7-tetramethylcyclotetrasiloxane,
1-trimethoxysilylethyl-3-(diethylamino)(methyldiethoxysilylpropylamino)methylsilylethyl-5,7-dipropyl-1,3,5,7-tetramethylcyclotetrasiloxane,
1-trimethoxysilylethyl-5-(diethylamino)(methyldiethoxysilylpropylamino)methylsilylethyl-3,7-dipropyl-1,3,5,7-tetramethylcyclotetrasiloxane,
1-trimethoxysilyloctyl-3-(diethylamino)(trimethoxysilylpropylamino)methylsilylethyl-1,3,5,5,7,7-hexamethylcyclotetrasiloxane,
1-trimethoxysilyloctyl-5-(diethylamino)(trimethoxysilylpropylamino)methylsilylethyl-1,3,3,5,7,7-hexamethylcyclotetrasiloxane,
1-trimethoxysilyloctyl-3-(diethylamino)(methyldimethoxysilylpropylamino)methylsilylethyl-1,3,5,5,7,7-hexamethylcyclotetrasiloxane,
1-trimethoxysilyloctyl-5-(diethylamino)(methyldimethoxysilylpropylamino)methylsilylethyl-1,3,3,5,7,7-hexamethylcyclotetrasiloxane,
1-trimethoxysilyloctyl-3-(diethylamino)(triethoxysilylpropylamino)methylsilylethyl-1,3,5,5,7,7-hexamethylcyclotetrasiloxane,
1-trimethoxysilyloctyl-5-(diethylamino)(triethoxysilylpropylamino)methylsilylethyl-1,3,3,5,7,7-hexamethylcyclotetrasiloxane,
1-trimethoxysilyloctyl-3-(diethylamino)(methyldiethoxysilylpropylamino)methylsilylethyl-1,3,5,5,7,7-hexamethylcyclotetrasiloxane,
1-trimethoxysilyloctyl-5-(diethylamino)(methyldiethoxysilylpropylamino)methylsilylethyl-1,3,3,5,7,7-hexamethylcyclotetrasiloxane,
1-trimethoxysilyloctyl-3-(diethylamino)(trimethoxysilylpropylamino)methylsilylethyl-5,7-dipropyl-1,3,5,7-tetramethylcyclotetrasiloxane,
1-trimethoxysilyloctyl-5-(diethylamino)(trimethoxysilylpropylamino)methylsilylethyl-3,7-dipropyl-1,3,5,7-tetramethylcyclotetrasiloxane,
1-trimethoxysilyloctyl-3-(diethylamino)(methyldimethoxysilylpropylamino)methylsilylethyl-5,7-dipropyl-1,3,5,7-tetramethylcyclotetrasiloxane,
1-trimethoxysilyloctyl-5-(diethylamino)(methyldimethoxysilylpropylamino)methylsilylethyl-3,7-dipropyl-1,3,5,7-tetramethylcyclotetrasiloxane,
1-trimethoxysilyloctyl-3-(diethylamino)(triethoxysilylpropylamino)methylsilylethyl-5,7-dipropyl-1,3,5,7-tetramethylcyclotetrasiloxane,
1-trimethoxysilyloctyl-5-(diethylamino)(triethoxysilylpropylamino)methylsilylethyl-3,7-dipropyl-1,3,5,7-tetramethylcyclotetrasiloxane,
1-trimethoxysilyloctyl-3-(diethylamino)(methyldiethoxysilylpropylamino)methylsilylethyl-5,7-dipropyl-1,3,5,7-tetramethylcyclotetrasiloxane,
1-trimethoxysilyloctyl-5-(diethylamino)(methyldiethoxysilylpropylamino)methylsilylethyl-3,7-dipropyl-1,3,5,7-tetramethylcyclotetrasiloxane,
1-methyldimethoxysilylethyl-3-(diethylamino)(trimethoxysilylpropylamino)methylsilylethyl-1,3,5,5,7,7-hexamethylcyclotetrasiloxane,
1-methyldimethoxysilylethyl-5-(diethylamino)(trimethoxysilylpropylamino)methylsilylethyl-1,3,3,5,7,7-hexamethylcyclotetrasiloxane,
1-methyldimethoxysilylethyl-3-(diethylamino)(methyldimethoxysilylpropylamino)-methylsilylethyl-1,3,5,5,7,7-hexamethylcyclotetrasiloxane,
1-methyldimethoxysilylethyl-5-(diethylamino)(methyldimethoxysilylpropylamino)-methylsilylethyl-1,3,3,5,7,7-hexamethylcyclotetrasiloxane,
1-methyldimethoxysilylethyl-3-(diethylamino)(triethoxysilylpropylamino)methylsilylethyl-1,3,5,5,7,7-hexamethylcyclotetrasiloxane,
1-methyldimethoxysilylethyl-5-(diethylamino)(triethoxysilylpropylamino)methylsilylethyl-1,3,3,5,7,7-hexamethylcyclotetrasiloxane,
1-methyldimethoxysilylethyl-3-(diethylamino)(methyldiethoxysilylpropylamino)-methylsilylethyl-1,3,5,5,7,7-hexamethylcyclotetrasiloxane,
1-methyldimethoxysilylethyl-5-(diethylamino)(methyldiethoxysilylpropylamino)-methylsilylethyl-1,3,3,5,7,7-hexamethylcyclotetrasiloxane,
1-methyldimethoxysilylethyl-3-(diethylamino)(trimethoxysilylpropylamino)methylsilylethyl-5,7-dipropyl-1,3,5,7-tetramethylcyclotetrasiloxane,
1-methyldimethoxysilylethyl-5-(diethylamino)(trimethoxysilylpropylamino)methylsilylethyl-3,7-dipropyl-1,3,5,7-tetramethylcyclotetrasiloxane,
1-methyldimethoxysilylethyl-3-(diethylamino)(methyldimethoxysilylpropylamino)-methylsilylethyl-5,7-dipropyl-1,3,5,7-tetramethylcyclotetrasiloxane,
1-methyldimethoxysilylethyl-5-(diethylamino)(methyldimethoxysilylpropylamino)-methylsilylethyl-3,7-dipropyl-1,3,5,7-tetramethylcyclotetrasiloxane,
1-methyldimethoxysilylethyl-3-(diethylamino)(triethoxysilylpropylamino)methylsilylethyl-5,7-dipropyl-1,3,5,7-tetramethylcyclotetrasiloxane,
1-methyldimethoxysilylethyl-5-(diethylamino)(triethoxysilylpropylamino)methylsilylethyl-3,7-dipropyl-1,3,5,7-tetramethylcyclotetrasiloxane,
1-methyldimethoxysilylethyl-3-(diethylamino)(methyldiethoxysilylpropylamino)-methylsilylethyl-5,7-dipropyl-1,3,5,7-tetramethylcyclotetrasiloxane,
1-methyldimethoxysilylethyl-5-(diethylamino)(methyldiethoxysilylpropylamino)-methylsilylethyl-3,7-dipropyl-1,3,5,7-tetramethylcyclotetrasiloxane,
1,3,5-tris(trimethoxysilylethyl)-7-(diethylamino)(trimethoxysilylpropylamino)-methylsilylethyl-1,3,5,7-tetramethylcyclotetrasiloxane,
1,3,5-tris(methyldimethoxysilylethyl)-7-(diethylamino)(trimethoxysilylpropylamino)-methylsilylethyl-1,3,5,7-tetramethylcyclotetrasiloxane,
1,3,5-tris(trimethoxysilylethyl)-7-(diethylamino)(methyldimethoxysilylpropylamino)-methylsilylethyl-1,3,5,7-tetramethylcyclotetrasiloxane,
1,3,5-tris(methyldimethoxysilylethyl)-7-(diethylamino)(methyldimethoxysilylpropylamino)-methylsilylethyl-1,3,5,7-tetramethylcyclotetrasiloxane,
1,3,5-tris(trimethoxysilylethyl)-7-(diethylamino)(triethoxysilylpropylamino)methylsilylethyl-1,3,5,7-tetramethylcyclotetrasiloxane,
1,3,5-tris(methyldimethoxysilylethyl)-7-(diethylamino)(triethoxysilylpropylamino)-methylsilylethyl-1,3,5,7-tetramethylcyclotetrasiloxane,
1,3,5-tris(trimethoxysilylethyl)-7-(diethylamino)(methyldiethoxysilylpropylamino)-methylsilylethyl-1,3,5,7-tetramethylcyclotetrasiloxane,
1,3,5-tris(methyldimethoxysilylethyl)-7-(diethylamino)(methyldiethoxysilylpropylamino)-methylsilylethyl-1,3,5,7-tetramethylcyclotetrasiloxane,
1-methyldimethoxysilyl-2-bis(trimethoxysilylpropylamino)methylsilylethylene,
1-methyldimethoxysilyl-2-bis(methyldimethoxysilylpropylamino)methylsilylethylene,
1-methyldimethoxysilyl-2-bis(triethoxysilylpropylamino)methylsilylethylene,
1-methyldimethoxysilyl-2-bis(methyldiethoxysilylpropylamino)methylsilylethylene,
1-methyldimethoxysilyl-6-bis(trimethoxysilylpropylamino)methylsilylhexane,
1-methyldimethoxysilyl-6-bis(methyldimethoxysilylpropylamino)methylsilylhexane,
1-methyldimethoxysilyl-6-bis(triethoxysilylpropylamino)methylsilylhexane,
1-methyldimethoxysilyl-6-bis(methyldiethoxysilylpropylamino)methylsilylhexane,
1-methyldimethoxysilyl-8-bis(trimethoxysilylpropylamino)methylsilyloctane,
1-methyldimethoxysilyl-8-bis(methyldimethoxysilylpropylamino)methylsilyloctane,
1-methyldimethoxysilyl-8-bis(triethoxysilylpropylamino)methylsilyloctane,
1-methyldimethoxysilyl-8-bis(methyldiethoxysilylpropylamino)methylsilyloctane,
1-trimethoxysilyl-2-bis((trimethoxysilylpropylamino)methylsilylethylene,
1-trimethoxysilyl-2-bis(methyldimethoxysilylpropylamino)methylsilylethylene,
1-trimethoxysilyl-2-bis(triethoxysilylpropylamino)methylsilylethylene,
1-trimethoxysilyl-2-bis(methyldiethoxysilylpropylamino)methylsilylethylene,
1-trimethoxysilyl-6-bis(trimethoxysilylpropylamino)methylsilylhexane,
1-trimethoxysilyl-6-bis(methyldimethoxysilylpropylamino)methylsilylhexane,
1-trimethoxysilyl-6-bis(triethoxysilylpropylamino)methylsilylhexane,
1-trimethoxysilyl-6-bis(methyldiethoxysilylpropylamino)methylsilylhexane,
1-trimethoxysilyl-8-bis(trimethoxysilylpropylamino)methylsilyloctane,
1-trimethoxysilyl-8-bis(methyldimethoxysilylpropylamino)methylsilyloctane,
1-trimethoxysilyl-8-bis(triethoxysilylpropylamino)methylsilyloctane,
1-trimethoxysilyl-8-bis(methyldiethoxysilylpropylamino)methylsilyloctane,
1-trimethoxysilyl-2-bis(trimethoxysilylpropylamino)methylsilylethylene,
1-trimethoxysilyl-2-bis(methyldimethoxysilylpropylamino)methylsilylethylene,
1-trimethoxysilyl-2-bis(triethoxysilylpropylamino)methylsilylethylene,
1-trimethoxysilyl-2-bis(methyldiethoxysilylpropylamino)methylsilylethylene,
1-trimethoxysilyl-6-bis(trimethoxysilylpropylamino)methylsilylhexane,
1-trimethoxysilyl-6-bis(methyldimethoxysilylpropylamino)methylsilylhexane,
1-trimethoxysilyl-6-bis(triethoxysilylpropylamino)methylsilylhexane,
1-trimethoxysilyl-6-bis(methyldiethoxysilylpropylamino)methylsilylhexane,
1-trimethoxysilyl-8-bis(trimethoxysilylpropylamino)methylsilyloctane,
1-trimethoxysilyl-8-bis(methyldimethoxsilylpropylamino)methylsilyloctane,
1-trimethoxysilyl-8-bis(triethoxysilylpropylamino)methylsilyloctane,
1-trimethoxysilyl-8-bis(methyldiethoxysilylpropylamino)methylsilyloctane,
1-triethoxysilyl-2-bis(trimethoxysilylpropylamino)methylsilylethylene,
1-triethoxysilyl-2-bis(methyldimethoxysilylpropylamino)methylsilylethylene,
1-triethoxysilyl-2-bis(triethoxysilylpropylamino)methylsilylethylene,
1-triethoxysilyl-2-bis(methyldiethoxysilylpropylamino)methylsilylethylene,
1-triethoxysilyl-6-bis(trimethoxysilylpropylamino)methylsilylhexane,
1-triethoxysilyl-6-bis(methyldimethoxysilylpropylamino)methylsilylhexane,
1-triethoxysilyl-6-bis(triethoxysilylpropylamino)methylsilylhexane,
1-triethoxysilyl-6-bis(methyldiethoxysilylpropylamino)methylsilylhexane,
1-triethoxysilyl-8-bis(trimethoxysilylpropylamino)methylsilyloctane,
1-triethoxysilyl-8-bis(methyldimethoxysilylpropylamino)methylsilyloctane,
1-triethoxysilyl-8-bis(triethoxysilylpropylamino)methylsilyloctane,
1-triethoxysilyl-8-bis(methyldiethoxysilylpropylamino)methylsilyloctae,
1-methyldiethoxysilyl-2-bis(trimethoxysilylpropylamino)methylsilylethylene,
1-methyldiethoxysilyl-2-bis(methyldimethoxysilylpropylamino)methylsilylethylene,
1-methyldiethoxysilyl-2-bis(triethoxysilylpropylamino)methylsilylethylene,
1-methyldiethoxysilyl-2-bis(methyldiethoxysilylpropylamino)methylsilylethylene,
1-methyldiethoxysilyl-6-bis(trimethoxysilylpropylamino)methylsilylhexane,
1-methyldiethoxysilyl-6-bis(methyldimethoxysilylpropylamino)methylsilylhexane,
1-methyldiethoxysilyl-6-bis(triethoxysilylpropylamino)methylsilylhexane,
1-methyldiethoxysilyl-6-bis(methyldiethoxysilylpropylamino)methylsilylhexane,
1-methyldiethoxysilyl-8-bis(trimethoxysilylpropylamino)methylsilyloctane,
1-methyldiethoxysilyl-8-bis(methyldimethoxysilylpropylamino)methylsilyloctane,
1-methyldiethoxysilyl-8-bis(triethoxysilylpropylamino)methylsilyloctane,
1-methyldiethoxysilyl-8-bis(methyldiethoxysilylpropylamino)methylsilyloctane,
trimethoxysilylmethyl-bis(trimethoxysilylpropylamino)methylethylsulfide,
trimethoxysilylmethyl-bis(methyldimethoxysilylpropylamino)methylethylsulfide,
trimethoxysilylmethyl-bis(triethoxysilylpropylamino)methylethylsulfide,
trimethoxysilylmethyl-bis(methyldiethoxysilylpropylamino)methylethylsulfide,
trimethoxysilylpropylbis(trimethoxysilylpropylamino)methylethylsulfide,
trimethoxysilylpropylbis(methyldimethoxysilylpropylamino)methylethylsulfide,
trimethoxysilylpropylbis(triethoxysilylpropylamino)methylethylsulfide,
trimethoxysilylpropylbis(methyldiethoxysilylpropylamino)methylethylsulfide,
methyldimethoxysilylpropylbis(trimethoxysilylpropylamino)methylethylsulfide,
methyldimethoxysilylpropylbis(methyldimethoxysilylpropylamino)methylethylsulfide,
methyldimethoxysilylpropylbis(triethoxysilylpropylamino)methylethylsulfide,
methyldimethoxysilylpropylbis(methyldiethoxysilylpropylamino)methylethylsulfide,
trimethoxysilyloctylbis(trimethoxysilylpropylamino)methylethylsulfide,
trimethoxysilyloctylbis(methyldimethoxysilylpropylamino)methylethylsulfide,
trimethoxysilyloctylbis(triethoxysilylpropylamino)methylethylsulfide,
trimethoxysilyloctylbis(methyldiethoxysilylpropylamino)methylethylsulfide,
1-trimethoxysilylethyldimethylsilyl-2-bis(trimethoxysilylpropylamino)methylsilylethyl-dimethylsilylbenzene,
I -trimethoxysilylethyldimethylsilyl-3 -bis(trimethoxysilylpropylamino)methylsilylethyl-dimethylsilylbenzene,
1-trimethoxysilylethyldimethylsilyl-4-bis(trimethoxysilylpropylamino)methylsilylethyl-dimethylsilylbenzene,
1-trimethoxysilylethyldimethylsilyl-2-bis(methyldimethoxysilylpropylamino)methylsilyl-ethyldimethylsilylbenzene,
1-trimethoxysilylethyldimethylsilyl-3-bis(methyldimethoxysilylpropylamino)methylsilyl-ethyldimethylsilylbenzene,
1-trimethoxysilylethyldimethylsilyl-4-bis(methyldimethoxysilylpropylamino)methylsilyl-ethyldimethylsilylbenzene,
1-trimethoxysilylethyldimethylsilyl-2-bis(triethoxysilylpropylamino)methylsilylethyl-dimethylsilylbenzene,
1-trimethoxysilylethyldimethylsilyl-3-bis(triethoxysilylpropylamino)methylsilylethyl-dimethylsilylbenzene,
1-trimethoxysilylethyldimethylsilyl-4-bis(triethoxysilylpropylamino)methylsilylethyl-dimethylsilylbenzene,
1-trimethoxysilylethyldimethylsilyl-2-bis(methyldiethoxysilylpropylamino)methylsilyl-ethyldimethylsilylbenzene,
1-trimethoxysilylethyldimethylsilyl-3-bis(methyldiethoxysilylpropylamino)methylsilyl-ethyldimethylsilylbenzene,
1-trimethoxysilylethyldimethylsilyl-4-bis(methyldiethoxysilylpropylamino)methylsilyl-ethyldimethylsilylbenzene,
1-methyldimethoxysilylethyldimethylsilyl-2-bis(trimethoxysilylpropylamino)methylsilyl-ethyldimethylsilylbenzene,
1-methyldimethoxysilylethyldimethylsilyl-3-bis(trimethoxysilylpropylamino)methylsilyl-ethyldimethylsilylbenzene,
1-methyldimethoxysilylethyldimethylsilyl-4-bis(trimethoxysilylpropylamino)methylsilyl-ethyldimethylsilylbenzene,
1-methyldimethoxysilylethyldimethylsilyl-2-bis(methyldimethoxysilylpropylamino)-methylsilylethyldimethylsilylbenzene,
1-methyldimethoxysilylethyldimethylsilyl-3-bis(methyldimethoxysilylpropylamino)-methylsilylethyldimethylsilylbenzene,
1-methyldimethoxysilylethyldimethylsilyl-4-bis(methyldimethoxysilylpropylamino)-methylsilylethyldimethylsilylbenzene,
1-methyldimethoxysilylethyldimethylsilyl-2-bis(triethoxysilylpropylamino)methylsilyl-ethyldimethylsilylbenzene,
1-methyldimethoxysilylethyldimethylsilyl-3-bis(triethoxysilylpropylamino)methylsilyl-ethyldimethylsilylbenzene,
1-methyldimethoxysilylethyldimethylsilyl-4-bis(triethoxysilylpropylamino)methylsilyl-ethyldimethylsilylbenzene,
1-methyldimethoxysilylethyldimethylsilyl-2-bis(methyldiethoxysilylpropylamino)-methylsilylethyldimethylsilylbenzene,
1-methyldimethoxysilylethyldimethylsilyl-3-bis(methyldiethoxysilylpropylamino)-methylsilylethyldimethylsilylbenzene,
1-methyldimethoxysilylethyldimethylsilyl-4-bis(methyldiethoxysilylpropylamino)-methylsilylethyldimethylsilylbenzene,
1-trimethoxysilylethyl-3-bis(trimethoxysilylpropylamino)methylsilylethyl-1,1,3,3-tetramethyldisiloxane,
1-trimethoxysilylethyl-3-bis(methyldimethoxysilylpropylamino)methylsilylethyl-1,1,3,3-tetramethyldisiloxane,
1-trimethoxysilylethyl-3-bis(triethoxysilylpropylamino)methylsilylethyl-1,1,3,3-tetramethyldisiloxane,
1-trimethoxysilylethyl-3-bis(methyldiethoxysilylpropylamino)methylsilylethyl-1,1,3,3-tetramethyldisiloxane,
1-trimethoxysilylethyl-9-bis(trimethoxysilylpropylamino)methylsilylethyl-1,1,3,3,5,5,7,7,9,9-decamethylpentasiloxane,
1-trimethoxysilylethyl-9-bis(methyldimethoxysilylpropylamino)methylsilylethyl-1,1,3,3,5,5,7,7,9,9-decamethylpentasiloxane,
1-trimethoxysilylethyl-9-bis(triethoxysilylpropylamino)methylsilylethyl-1,1,3,3,5,5,7,7,9,9-decamethylpentasiloxane,
1-trimethoxysilylethyl-9-bis(methyldiethoxysilylpropylamino)methylsilylethyl-1,1,3,3,5,5,7,7,9,9-decamethylpentasiloxane,
α-trimethoxysilylethyl-ω-bis(trimethoxysilylpropylamino)methylsilylethyl-polymethylpolysiloxane,
α-trimethoxysilylethyl-ω-bis(methyldimethoxysilylpropylamino)methylsilylethyl-polymethylpolysiloxane,
α-trimethoxysilylethyl-ω-bis(triethoxysilylpropylamino)methylsilylethyl-polymethylpolysiloxane,
α-trimethoxysilylethyl-ω-bis(methyldiethoxysilylpropylamino)methylsilylethyl-polymethylpolysiloxane,
1-trimethoxysilylethyl-3-bis(trimethoxysilylpropylamino)methylsilylethyl-1,3,5,5,7,7-hexamethylcyclotetrasiloxane,
1-trimethoxysilylethyl-5-bis(trimethoxysilylpropylamino)methylsilylethyl-1,3,3,5,7,7-hexamethylcyclotetrasiloxane,
1-trimethoxysilylethyl-3-bis(methyldimethoxysilylpropylamino)methylsilylethyl-1,3,5,5,7,7-hexamethylcyclotetrasiloxane,
1-trimethoxysilylethyl-5-bis(methyldimethoxysilylpropylamino)methylsilylethyl-1,3,3,5,7,7-hexamethylcyclotetrasiloxane,
1-trimethoxysilylethyl-3-bis(triethoxysilylpropylamino)methylsilylethyl-1,3,5,5,7,7-hexamethylcyclotetrasiloxane,
1-trimethoxysilylethyl-5-bis(triethoxysilylpropylamino)methylsilylethyl-1,3,3,5,7,7-hexamethylcyclotetrasiloxane,
1-trimethoxysilylethyl-3-bis(methyldiethoxysilylpropylamino)methylsilylethyl-1,3,5,5,7,7-hexamethylcyclotetrasiloxane,
1-trimethoxysilylethyl-5-bis(methyldiethoxysilylpropylamino)methylsilylethyl-1,3,3,5,7,7-hexamethylcyclotetrasiloxane,
1-trimethoxysilylethyl-3-bis(trimethoxysilylpropylamino)methylsilylethyl-5,7-dipropyl-1,3,5,7-tetramethylcyclotetrasiloxane,
1-trimethoxysilylethyl-5-bis(trimethoxysilylpropylamino)methylsilylethyl-3,7-dipropyl-1,3,5,7-tetramethylcyclotetrasiloxane,
1-trimethoxysilylethyl-3-bis(methyldimethoxysilylpropylamino)methylsilylethyl-5,7-dipropyl-1,3,5,7-tetramethylcyclotetrasiloxane,
1-trimethoxysilylethyl-5-bis(methyldimethoxysilylpropylamino)methylsilylethyl-3,7-dipropyl-1,3,5,7-tetramethylcyclotetrasiloxane,
1-trimethoxysilylethyl-3-bis(triethoxysilylpropylamino)methylsilylethyl-5,7-dipropyl-1,3,5,7-tetramethylcyclotetrasiloxane,
1-trimethoxysilylethyl-5-bis(triethoxysilylpropylamino)methylsilylethyl-3,7-dipropyl-1,3,5,7-tetramethylcyclotetrasiloxane,
1-trimethoxysilylethyl-3-bis(methyldiethoxysilylpropylamino)methylsilylethyl-5,7-dipropyl-1,3,5,7-tetramethylcyclotetrasiloxane,
1-trimethoxysilylethyl-5-bis(methyldiethoxysilylpropylamino)methylsilylethyl-3,7-dipropyl-1,3,5,7-tetramethylcyclotetrasiloxane,
1-trimethoxysilyloctyl-3-bis(trimethoxysilylpropylamino)methylsilylethyl-1,3,5,5,7,7-hexamethylcyclotetrasiloxane,
1-trimethoxysilyloctyl-5-bis(trimethoxysilylpropylamino)methylsilylethyl-1,3,3,5,7,7-hexamethylcyclotetrasiloxane,
1-trimethoxysilyloctyl-3-bis(methyldimethoxysilylpropylamino)methylsilylethyl-1,3,5,5,7,7-hexamethylcyclotetrasiloxane,
1-trimethoxysilyloctyl-5-bis(methyldimethoxysilylpropylamino)methylsilylethyl-1,3,3,5,7,7-hexamethylcyclotetrasiloxane,
1-trimethoxysilyloctyl-3-bis(triethoxysilylpropylamino)methylsilylethyl-1,3,5,7,7-hexamethylcyclotetrasiloxane,
1-trimethoxysilyloctyl-5-bis(triethoxysilylpropylamino)methylsilylethyl-1,3,3,5,7,7-hexamethylcyclotetrasiloxane,
1-trimethoxysilyloctyl-3-bis(methyldiethoxysilylpropylamino)methylsilylethyl-1,3,5,5,7,7-hexamethylcyclotetrasiloxane,
1-trimethoxysilyloctyl-5-bis(methyldiethoxysilylpropylamino)methylsilylethyl-1,3,3,5,7,7-hexamethylcyclotetrasiloxane,
1-trimethoxysilyloctyl-3-bis(trimethoxysilylpropylamino)methylsilylethyl-5,7-dipropyl-1,3,5,7-tetramethylcyclotetrasiloxane,
1-trimethoxysilyloctyl-5-bis(trimethoxysilylpropylamino)methylsilylethyl-3,7-dipropyl-1,3,5,7-tetramethylcyclotetrasiloxane,
1-trimethoxysilyloctyl-3-bis(methyldimethoxysilylpropylamino)methylsilylethyl-5,7-dipropyl-1,3,5,7-tetramethylcyclotetrasiloxane,
1-trimethoxysilyloctyl-5-bis(methyldimethoxysilypropylamino)methylsilylethyl-3,7-dipropyl-1,3,5,7-tetramethylcyclotetrasiloxane,
1-trimethoxysilyloctyl-3-bis(triethoxysilylpropylamino)methylsilylethyl-5,7-dipropyl-1,3,5,7-tetramethylcyclotetrasiloxane,
1-trimethoxysilyloctyl-5-bis(triethoxysilylpropylamino)methylsilylethyl-3,7-dipropyl-1,3,5,7-tetramethylcyclotetrasiloxane,
1-trimethoxysilyloctyl-3-bis(methyldiethoxysilylpropylamino)methylsilylethyl-5,7-dipropyl-1,3,5,7-tetramethylcyclotetrasiloxane,
1-trimethoxysilyloctyl-5-bis(methyldiethoxysilylpropylamino)methylsilylethyl-3,7-dipropyl-1,3,5,7-tetramethylcyclotetrasiloxane,
1-methyldimethoxysilylethyl-3-bis(trimethoxysilylpropylamino)methylsilylethyl-1,3,5,5,7,7-hexamethylcyclotetrasiloxane,
1-methyldimethoxysilylethyl-5-bis(trimethoxysilylpropylamino)methylsilylethyl-1,3,3,5,7,7-hexamethylcyclotetrasiloxane,
1-methyldimethoxysilylethyl-3-bis(methyldimethoxysilylpropylamino)methylsilylethyl-1,3,5,5,7,7-hexamethylcyclotetrasiloxane,
1-methyldimethoxysilylethyl-5-bis(methyldimethoxysilylpropylamino)methylsilylethyl-1,3,3,5,7,7-hexamethylcyclotetrasiloxane,
1-methyldimethoxysilylethyl-3-bis(triethoxysilylpropylamino)methylsilylethyl-1,3,5,5,7,7-hexamethylcyclotetrasiloxane,
1-methyldimethoxysilylethyl-5-bis(triethoxysilylpropylamino)methylsilylethyl-1,3,3,5,7,7-hexamethylcyclotetrasiloxane,
1-methyldimethoxysilylethyl-3-bis(methyldiethoxysilylpropylamino)methylsilylethyl-1,3,5,5,7,7-hexamethylcyclotetrasiloxane,
1-methyldimethoxysilylethyl-5-bis(methyldiethoxysilylpropylamino)methylsilylethyl-1,3,3,5,7,7-hexamethylcyclotetrasiloxane,
1-methyldimethoxysilylethyl-3-bis(trimethoxysilylpropylamino)methylsilylethyl-5,7-dipropyl-1,3,5,7-tetramethylcyclotetrasiloxane,
1-methyldimethoxysilylethyl-5-bis(trimethoxysilylpropylamino)methylsilylethyl-3,7-dipropyl-1,3,5,7-tetramethylcyclotetrasiloxane,
1-methyldimethoxysilylethyl-3-bis(methyldimethoxysilylpropylamino)methylsilylethyl-5,7-dipropyl-1,3,5,7-tetramethylcyclotetrasiloxane,
1-methyldimethoxysilylethyl-5-bis(methyldimethoxysilylpropylamino)methylsilylethyl-3,7-dipropyl-1,3,5,7-tetramethylcyclotetrasiloxane,
1-methyldimethoxysilylethyl-3-bis(triethoxysilylpropylamino)methylsilylethyl-5,7-dipropyl-1,3,5,7-tetramethylcyclotetrasiloxane,
1-methyldimethoxysilylethyl-5-bis(triethoxysilylpropylamino)methylsilylethyl-3,7-dipropyl-1,3,5,7-tetramethylcyclotetrasiloxane,
1-methyldimethoxysilylethyl-3-bis(methyldiethoxysilylpropylamino)methylsilylethyl-5,7-dipropyl-1,3,5,7-tetramethylcyclotetrasiloxane,
1-methyldimethoxysilylethyl-5-bis(methyldiethoxysilylpropylamino)methylsilylethyl-3,7-dipropyl-1,3,5,7-tetramethylcyclotetrasiloxane,
1,3,5-tris(trimethoxysilylethyl)-7-bis(trimethoxysilylpropylamino)methylsilylethyl-1,3,5,7-tetramethylcyclotetrasiloxane,
1,3,5-tris(methyldimethoxysilylethyl)-7-bis(trimethoxysilylpropylamino)methylsilylethyl-1,3,5,7-tetramethylcyclotetrasiloxane,
1,3,5-tris(trimethoxysilylethyl)-7-bis(methyldimethoxysilylpropylamino)methylsilylethyl-1,3,5,7-tetramethylcyclotetrasiloxane,
1,3,5-tris(methyldimethoxysilylethyl)-7-bis(methyldimethoxysilylpropylamino)-methylsilylethyl-1,3,5,7-tetramethylcyclotetrasiloxane,
1,3,5-tris(trimethoxysilylethyl)-7-bis(triethoxysilylpropylamino)methylsilylethyl-1,3,5,7-tetramethylcyclotetrasiloxane,
1,3,5-tris(methyldimethoxysilylethyl)-7-bis(triethoxysilylpropylamino)methylsilylethyl-1,3,5,7-tetramethylcyclotetrasiloxane,
1,3,5-tris(trimethoxysilylethyl)-7-bis(methyldiethoxysilylpropylamino)methylsilylethyl-1,3,5,7-tetramethylcyclotetrasiloxane,
1,3,5-tris(methyldimethoxysilylethyl)-7-bis(methyldiethoxysilylpropylamino)-methylsilylethyl-1,3,5,7-tetramethylcyclotetrasiloxane,
1-trimethoxysilylethyl-2-dimethyl(trimethoxysilylpropylamino)ethylene,
1-trimethoxysilylethyl-2-dimethyl(methyldimethoxysilylpropylamino)ethylene,
1-trimethoxysilylethyl-2-dimethyl(triethoxysilylpropylamino)ethylene,
1-trimethoxysilylethyl-2-dimethyl(methyldiethoxysilylpropylamino)ethylene,
1-methyldimethoxysilylethyl-2-dimethyl(trimethoxysilylpropylamino)ethylene,
1-methyldimethoxysilylethyl-2-dimethyl(methyldimethoxysilylpropylamino)ethylene,
1-methyldimethoxysilylethyl-2-dimethyl(triethoxysilylpropylamino)ethylene,
1-methyldimethoxysilylethyl-2-dimethyl(methyldiethoxysilylpropylamino)ethylene,
1-triethoxysilylethyl-2-dimethyl(trimethoxysilylpropylamino)ethylene,
1-triethoxysilylethyl-2-dimethyl(methyldimethoxysilylpropylamino)ethylene,
1-triethoxysilylethyl-2-dimethyl(triethoxysilylpropylamino)ethylene,
1-triethoxysilylethyl-2-dimethyl(methyldiethoxysilylpropylamino)ethylene,
1-methyldiethoxysilylethyl-2-dimethyl(trimethoxysilylpropylamino)ethylene,
1-methyldiethoxysilylethyl-2-dimethyl(methyldimethoxysilylpropylamino)ethylene,
1-methyldiethoxysilylethyl-2-dimethyl(triethoxysilylpropylamino)ethylene and
1-methyldiethoxysilylethyl-2-dimethyl(methyldiethoxysilylpropylamino)ethylene.

### [2] Composition Containing Bissilyl Compound Having Silyl Group Substituted with Organoxysilylalkylamino Group

Compound (1) of the invention can be used alone, although it can also be used as a composition.

For example, it may be used as a composition (referred to below as "Composition 1") containing an aprotic solvent, provided that the solvent does not adversely affect Compound (1).

Specific examples of the aprotic solvent include aliphatic hydrocarbon compounds of 5 to 20 carbon atoms, such as pentane, hexane, cyclohexane, octane, isooctane, nonane, decane, dodecane and isododecane; aromatic hydrocarbon compounds of 6 to 10 carbon atoms, such as benzene, toluene and xylene; ether compounds such as diethyl ether, tetrahydrofuran, 2-methyltetrahydrofuran, 4-methyltetrahydropyran, cyclopentyl methyl ether and dioxane; ester compounds such as ethyl acetate, isopropyl acetate and butyl acetate; nitrile compounds such as acetonitrile, propionitrile, butyronitrile and isobutyronitrile; amide compounds such as N,N-dimethylformamide, dimethylacetamide and N-methylpyrrolidone; and organosilicon compounds of 1 to 10 silicon atoms, such as tetraethylsilane, hexamethyldisiloxane, octamethyltrisiloxane, tris(trimethylsiloxy)methylsilane, 3,5-diethyl-1,1,1,3,5,7,7,7-octamethyltetrasiloxane, octamethylcyclotetrasiloxane, decamethyltetrasiloxane, decamethylcyclopentasiloxane and dodecamethylpentasiloxane. These aprotic solvents may be used singly, or two or more may may be used in admixture.

Of these, from the standpoint of safety in particular, aliphatic hydrocarbon compounds of 8 to 12 carbon atoms and organosilicon compounds of 1 to 8 silicon atoms are more preferred.

The amount of aprotic solvent used in Composition 1 is not particularly limited, although the concentration of Compound (1) is preferably from 0.1 to 90 wt%, more preferably from 1 to 90 wt%, and even more preferably from 2 to 80 wt%.

Alternatively, Compound (1) of the invention may be used as a composition containing Compound (1) and an amino group-containing organoxysilane compound of general formula (2) below (referred to below as "Compound (2)"), which composition is referred to below as "Composition 2."

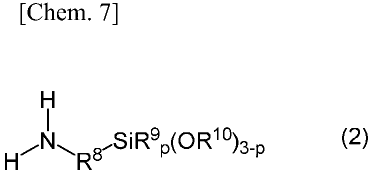

### (wherein R⁸ to R¹⁰ and p are as defined above)

Specific examples of Compound (2) include aminoalkyltriorganoxysilane compounds such as aminomethyltrimethoxysilane, aminomethyltriethoxysilane, aminopropyltrimethoxysilane, aminopropyltriethoxysilane, aminooctyltrimethoxysilane, aminooctyltriethoxysilane, aminoethylaminopropyltrimethoxysilane, aminoethylaminopropyltriethoxysilane, aminopropylaminopropyltrimethoxysilane, aminopropylaminopropyltriethoxysilane, aminoethylaminoethylaminopropyltrimethoxysilane, aminoethylaminoethylaminopropyltriethoxysilane, aminoethyltrimethoxysilylmethylsulfide and aminoethyltriethoxysilylmethylsulfide; aminoalkylalkyldiorganoxysilane compounds such as aminopropylmethyldimethoxysilane, aminopropylmethyldiethoxysilane, aminoethylaminopropylmethyldimethoxysilane, aminoethylaminopropylmethyldiethoxysilane, aminopropylaminopropylmethyldimethoxysilane, aminopropylaminopropylmethyldiethoxysilane, aminoethylaminoethylaminopropylmethyldimethoxysilane and aminoethylaminoethylaminopropylmethyldiethoxysilane; and aminoalkyldialkylorganoxysilane compounds such as aminopropyldimethylmethoxysilane, aminopropyldimethylethoxysilane, aminoethylaminopropyldimethylmethoxysilane, aminoethylaminopropyldimethylethoxysilane, aminopropylaminopropyldimethylmethoxysilane, aminopropylaminopropyldimethylethoxysilane, aminoethylaminoethylaminopropyldimethylmethoxysilane and aminoethylaminoethylaminopropyldimethylethoxysilane.

In Composition 2, the compounding ratios of Compound (1) and Compound (2) are not particularly limited. However, from the standpoint of the hardness of the film, the amount of Compound (2) relative to the combined weight of Compounds (1) and (2), is preferably from 1 to 20 wt%, more preferably from 2 to 15 wt%, and even more preferably from 3 to 10 wt%.

Composition 2 can also be used in the absence of a solvent, although a solvent may be used provided that doing so does not adversely affect Compounds (1) and (2). Specific examples of the solvent include the same solvents as those mentioned above for the above-described solvent-containing Composition 1. In this case as well, an aprotic solvent is preferred.

Compound (1) and Compositions 1 and 2 of the invention cure even in the absence of a catalyst, although a catalyst may be added within a range where cracking and clouding do not arise.

Exemplary catalysts include at least one type of metal compound selected from titanium compounds, aluminum compounds, zinc compounds and tin compounds, and also acidic compounds and basic compounds.

Specific examples of titanium compounds include tetralkyl orthotitanates such as tetrabutyl orthotitanate, tetramethyl orthotitanate, tetraethyl orthotitanate, tetrapropyl orthotitanate and tetraisopropyl orthotitanate; partial hydrolytic condensation products of these, and titanium acylates.

Specific examples of aluminum compounds include aluminum trihydroxide, aluminum alcoholates, aluminum acylates, salts of aluminum acylates, aluminosiloxy compounds and aluminum metal chelate compounds.

Specific examples of zinc compounds include zinc octanoate and zinc 2-ethylhexanoate.

Specific examples of tin compounds include dioctyltin dioctate and dioctyltin dilaurate.

Specific examples of acidic compounds include hydrogen chloride, hydrogen bromide, hydrogen iodide, nitric acid, sulfuric acid, acetic acid and methanesulfonic acid.

Specific examples of basic compounds include ammonia, sodium hydroxide and potassium hydroxide.

These catalysts may each be used singly, or two or more may be used in admixture.

The amount of catalyst used in not particularly limited. However, for the effects of the catalyst to be manifested, the amount relative to the weight of Compound (1) or the overall weight of Compounds (1) and (2) is preferably from 0.01 to 10 wt%, and more preferably from 0.1 to 5 wt%.

Compositions 1 and 2 of the invention can be obtained by mixing Compound (1) with, where necessary, a solvent, Compound (2), a catalyst and other additives while being careful not to introduce moisture, and rendering the mixture into a uniform solution. The incorporation of moisture can be avoided by handling the respective ingredients in a nitrogen, argon or other inert gas atmosphere.

### [3] Method for Preparing Bissilyl Compound Having Silyl Group Substituted with Organoxysilylalkylamino Group

Next, a method for preparing Compound (1) is described.

The inventive method of preparation includes the step of carrying out an amine exchange reaction between above Compound (2) and a bissilyl compound of general formula (3) below (referred to below as "Compound (3)") in the presence of an acidic compound of pKa 4 to 12 and a polar aprotic solvent.
[Chem. 8]

R¹ₐ(R²O)₃₋ₐSi-R³-SiR⁴ₗ(OR⁵)ₘ(NR⁶R⁷)₃₋ₗ₋ₘ (3)

(wherein R¹ to R⁷, a, l and m are as defined above)

Specific examples of Compound (3) include trialkoxysilyl-bis(dialkylamino)alkylalkanes such as
1-trimethoxysilyl-2-bis(dimethylamino)methylsilylethylene,
1-trimethoxysilyl-6-bis(dimethylamino)methylsilylhexane,
1-trimethoxysilyl-8-bis(dimethylamino)methylsilyloctane,
1-triethoxysilyl-2-bis(dimethylamino)methylsilylethylene,
1-triethoxysilyl-6-bis(dimethylamino)methylsilylhexane,
1-triethoxysilyl-8-bis(dimethylamino)methylsilyloctane,
1-trimethoxysilyl-2-bis(diethylamino)methylsilylethylene,
1-trimethoxysilyl-6-bis(diethylamino)methylsilylhexane,
1-trimethoxysilyl-8-bis(diethylamino)methylsilyloctane,
1-triethoxysilyl-2-bis(diethylamino)methylsilylethylene,
1-triethoxysilyl-6-bis(diethylamino)methylsilylhexane,
1-triethoxysilyl-8-bis(diethylamino)methylsilyloctane,
1-trimethoxysilyl-2-bis(4-methylpiperazin-1-yl)methylsilylethylene,
1-trimethoxysilyl-6-bis(4-methylpiperazin-1-yl)methylsilylhexane,
1-trimethoxysilyl-8-bis(4-methylpiperazin-1-yl)methylsilyloctane,
1-triethoxysilyl-2-bis(4-methylpiperazin-1-yl)methylsilylethylene,
1-triethoxysilyl-6-bis(4-methylpiperazin-1-yl)methylsilylhexane,
1-triethoxysilyl-8-bis(4-methylpiperazin-1-yl)methylsilyloctane,
1-trimethoxysilyl-2-bis(dimethylamino)phenylsilylethylene,
1-trimethoxysilyl-6-bis(dimethylamino)phenylsilylhexane,
1-trimethoxysilyl-8-bis(dimethylamino)phenylsilyloctane,
1-triethoxysilyl-2-bis(dimethylamino)phenylsilylethylene,
1-triethoxysilyl-6-bis(dimethylamino)phenylsilylhexane,
1-triethoxysilyl-8-bis(dimethylamino)phenylsilyloctane,
1-trimethoxysilyl-2-bis(diethylamino)phenylsilylethylene,
1-trimethoxysilyl-6-bis(diethylamino)phenylsilylhexane,
1-trimethoxysilyl-8-bis(diethylamino)phenylsilyloctane,
1-triethoxysilyl-2-bis(diethylamino)phenylsilylethylene,
1-triethoxysilyl-6-bis(diethylamino)phenylsilylhexane,
1-triethoxysilyl-8-bis(diethylamino)phenylsilyloctane,
1-trimethoxysilyl-2-bis(4-methylpiperazin-1-yl)phenylsilylethylene,
1-trimethoxysilyl-6-bis(4-methylpiperazin-1-yl)phenylsilylhexane,
1-trimethoxysilyl-8-bis(4-methylpiperazin-1-yl)phenylsilyloctane,
1-triethoxysilyl-2-bis(4-methylpiperazin-1-yl)phenylsilylethylene,
1-triethoxysilyl-6-bis(4-methylpiperazin-1-yl)phenylsilylhexane,
1-triethoxysilyl-8-bis(4-methylpiperazin-1-yl)phenylsilyloctane,
1-trimethoxysilylethyl-3-bis(diethylamino)methylsilylethyl-1,1,3,3-tetramethyldisiloxane,
1-trimethoxysilylethyl-9-bis(diethylamino)methylsilylethyl-1,1,3,3,5,5,7,7,9,9-decamethylpentasiloxane,
α-trimethoxysilylethyl-ω-bis(diethylamino)methylsilylethyl-polymethylpolysiloxane,
1-triethoxysilylethyl-3-bis(diethylamino)methylsilylethyl-1,1,3,3-tetramethyldisiloxane,
1-triethoxysilylethyl-9-bis(diethylamino)methylsilylethyl-1,1,3,3,5,5,7,7,9,9-decamethylpentasiloxane,
α-triethoxysilylethyl-ω-bis(diethylamino)methylsilylethyl-polymethylpolysiloxane, trimethoxysilylmethyl-bis(diethylamino)methylethylsulfide,
trimethoxysilylpropyl-bis(diethylamino)methylethylsulfide,
trimethoxysilyloctyl-bis(diethylamino)methylethylsulfide,
1-trimethoxysilylethyldimethylsilyl-4-bis(diethylamino)methylsilylethyldimethylsilylbenzene, triethoxysilylmethyl-bis(diethylamino)methylethylsulfide,
triethoxysilylpropyl-bis(diethylamino)methylethylsulfide,
triethoxysilyloctyl-bis(diethylamino)methylethylsulfide and
1-triethoxysilylethyldimethylsilyl-4-bis(diethylamino)methylsilylethyldimethylsilylbenzene; alkylalkoxysilyl-bis(dialkylamino)alkylalkanes such as
1-methyldimethoxysilyl-2-bis(dimethylamino)methylsilylethylene,
1-methyldimethoxysilyl-6-bis(dimethylamino)methylsilylhexane,
1-methyldimethoxysilyl-8-bis(dimethylamino)methylsilyloctane,
1-methyldiethoxysilyl-2-bis(dimethylamino)methylsilylethylene,
1-methyldiethoxysilyl-6-bis(dimethylamino)methylsilylhexane,
1-methyldiethoxysilyl-8-bis(dimethylamino)methylsilyloctane,
1-methyldimethoxysilyl-2-bis(diethylamino)methylsilylethylene,
1-methyldimethoxysilyl-6-bis(diethylamino)methylsilylhexane,
1-methyldimethoxysilyl-8-bis(diethylamino)methylsilyloctane,
1-methyldiethoxysilyl-2-bis(diethylamino)methylsilylethylene,
1-methyldiethoxysilyl-6-bis(diethylamino)methylsilylhexane,
1-methyldiethoxysilyl-8-bis(diethylamino)methylsilyloctane,
1-methyldimethoxysilyl-2-bis(4-methylpiperazin-1-yl)methylsilylethylene,
1-methyldimethoxysilyl-6-bis(4-methylpiperazin-1-yl)methylsilylhexane,
1-methyldimethoxysilyl-8-bis(4-methylpiperazin-1-yl)methylsilyloctane,
1-methyldiethoxysilyl-2-bis(4-methylpiperazin-1-yl)methylsilylethylene,
1-methyldiethoxysilyl-6-bis(4-methylpiperazin-1-yl)methylsilylhexane,
1-methyldiethoxysilyl-8-bis(4-methylpiperazin-1-yl)methylsilyloctane,
1-methyldimethoxysilyl-2-bis(dimethylamino)phenylsilylethylene,
1-methyldimethoxysilyl-6-bis(dimethylamino)phenylsilylhexane,
1-methyldimethoxysilyl-8-bis(dimethylamino)phenylsilyloctane,
1-methyldiethoxysilyl-2-bis(dimethylamino)phenylsilylethylene,
1-methyldiethoxysilyl-6-bis(dimethylamino)phenylsilylhexane,
1-methyldiethoxysilyl-8-bis(dimethylamino)phenylsilyloctane,
1-methyldimethoxysilyl-2-bis(diethylamino)phenylsilylethylene,
1-methyldimethoxysilyl-6-bis(diethylamino)phenylsilylhexane,
1-methyldimethoxysilyl-8-bis(diethylamino)phenylsilyloctane,
1-methyldiethoxysilyl-2-bis(diethylamino)phenylsilylethylene,
1-methyldiethoxysilyl-6-bis(diethylamino)phenylsilylhexane,
1-methyldiethoxysilyl-8-bis(diethylamino)phenylsilyloctane,
1-methyldimethoxysilyl-2-bis(4-methylpiperazin-1-yl)phenylsilylethylene,
1-methyldimethoxysilyl-6-bis(4-methylpiperazin-1-yl)phenylsilylhexane,
1-methyldimethoxysilyl-8-bis(4-methylpiperazin-1-yl)phenylsilyloctane,
1-methyldiethoxysilyl-2-bis(4-methylpiperazin-1-yl)phenylsilylethylene,
1-methyldiethoxysilyl-6-bis(4-methylpiperazin-1-yl)phenylsilylhexane,
1-methyldiethoxysilyl-8-bis(4-methylpiperazin-1-yl)phenylsilyloctane,
1-methyldimethoxysilylethyl-3-bis(diethylamino)methylsilylethyl-1,1,3,3-tetramethyldisiloxane,
1-methyldimethoxysilylethyl-9-bis(diethylamino)methylsilylethyl-1,1,3,3,5,5,7,7,9,9-decamethylpentasiloxane,
α-methyldimethoxysilylethyl-ω-bis(diethylamino)methylsilylethyl-polymethylpolysiloxane,
1-methyldiethoxysilylethyl-3-bis(diethylamino)methylsilylethyl-1,1,3,3-tetramethyldisiloxane,
1-methyldiethoxysilylethyl-9-bis(diethylamino)methylsilylethyl-1,1,3,3,5,5,7,7,9,9-decamethylpentasiloxane,
α-methyldiethoxysilylethyl-ω-bis(diethylamino)methylsilylethyl-polymethylpolysiloxane,
methyldimethoxysilylmethyl-bis(diethylamino)methylethylsulfide,
methyldimethoxysilylpropyl-bis(diethylamino)methylethylsulfide,
methyldimethoxysilyloctyl-bis(diethylamino)methylethylsulfide,
1-methyldimethoxysilylethyldimethylsilyl-4-bis(diethylamino)methylsilylethyldimethyl-silylbenzene,
methyldiethoxysilylmethyl-bis(diethylamino)methylethylsulfide,
methyldiethoxysilylpropyl-bis(diethylamino)methylethylsulfide,
methyldiethoxysilyloctyl-bis(diethylamino)methylethylsulfide, and
1-methyldiethoxysilylethyldimethylsilyl-4-bis(diethylamino)methylsilylethyldimethyl-silylbenzene;
dialkylalkoxysilyl-bis(dialkylamino)alkylalkanes such as
1-dimethylmethoxysilyl-2-bis(dimethylamino)methylsilylethylene,
1-dimethylmethoxysilyl-6-bis(dimethylamino)methylsilylhexane,
1-dimethylmethoxysilyl-8-bis(dimethylamino)methylsilyloctane,
1-dimethylethoxysilyl-2-bis(dimethylamino)methylsilylethylene,
1-dimethylethoxysilyl-6-bis(dimethylamino)methylsilylhexane,
1-dimethylethoxysilyl-8-bis(dimethylamino)methylsilyloctane,
1-dimethylmethoxysilyl-2-bis(diethylamino)methylsilylethylene,
1-dimethylmethoxysilyl-6-bis(diethylamino)methylsilylhexane,
1-dimethylmethoxysilyl-8-bis(diethylamino)methylsilyloctane,
1-dimethylethoxysilyl-2-bis(diethylamino)methylsilylethylene,
1-dimethylethoxysilyl-6-bis(diethylamino)methylsilylhexane,
1-dimethylethoxysilyl-8-bis(diethylamino)methylsilyloctane,
1-dimethylmethoxysilyl-2-bis(4-methylpiperazin-1-yl)methylsilylethylene,
1-dimethylmethoxysilyl-6-bis(4-methylpiperazin-1-yl)methylsilylhexane,
1-dimethylmethoxysilyl-8-bis(4-methylpiperazin-1-yl)methylsilyloctane,
1-dimethylethoxysilyl-2-bis(4-methylpiperazin-1-yl)methylsilylethylene,
1-dimethylethoxysilyl-6-bis(4-methylpiperazin-1-yl)methylsilylhexane,
1-dimethylethoxysilyl-8-bis(4-methylpiperazin-1-yl)methylsilyloctane,
1-dimethylmethoxysilyl-2-bis(dimethylamino)phenylsilylethylene,
1-dimethylmethoxysilyl-6-bis(dimethylamino)phenylsilylhexane,
1-dimethylmethoxysilyl-8-bis(dimethylamino)phenylsilyloctane,
1-dimethylethoxysilyl-2-bis(dimethylamino)phenylsilylethylene,
1-dimethylethoxysilyl-6-bis(dimethylamino)phenylsilylhexane,
1-dimethylethoxysilyl-8-bis(dimethylamino)phenylsilyloctane,
1-dimethylmethoxysilyl-2-bis(diethylamino)phenylsilylethylene,
1-dimethylmethoxysilyl-6-bis(diethylamino)phenylsilylhexane,
1-dimethylmethoxysilyl-8-bis(diethylamino)phenylsilyloctane,
1-dimethylethoxysilyl-2-bis(diethylamino)phenylsilylethylene,
1-dimethylethoxysilyl-6-bis(diethylamino)phenylsilylhexane,
1-dimethylethoxysilyl-8-bis(diethylamino)phenylsilyloctane,
1-dimethylmethoxysilyl-2-bis(4-methylpiperazin-1-yl)phenylsilylethylene,
1-dimethylmethoxysilyl-6-bis(4-methylpiperazin-1-yl)phenylsilylhexane,
1-dimethylmethoxysilyl-8-bis(4-methylpiperazin-1-yl)phenylsilyloctane,
1-dimethylethoxysilyl-2-bis(4-methylpiperazin-1-yl)phenylsilylethylene,
1-dimethylethoxysilyl-6-bis(4-methylpiperazin-1-yl)phenylsilylhexane,
1-dimethylethoxysilyl-8-bis(4-methylpiperazin-1-yl)phenylsilyloctane,
1-dimethylmethoxysilylethyl-3-bis(diethylamino)methylsilylethyl-1,1,3,3-tetramethyldisiloxane,
1-dimethylmethoxysilylethyl-9-bis(diethylamino)methylsilylethyl-1,1,3,3,5,5,7,7,9,9-decamethylpentasiloxane,
α-dimethylmethoxysilylethyl-ω-bis(diethylamino)methylsilylethyl-polymethylpolysiloxane,
1-dimethylethoxysilylethyl-3-bis(diethylamino)methylsilylethyl-1,1,3,3-tetramethyldisiloxane,
1-dimethylethoxysilylethyl-9-bis(diethylamino)methylsilylethyl-1,1,3,3,5,5,7,7,9,9-decamethylpentasiloxane,
α-dimethylethoxysilylethyl-ω-bis(diethylamino)methylsilylethyl-polymethylpolysiloxane,
dimethylmethoxysilylmethyl-bis(diethylamino)methylethylsulfide,
dimethylmethoxysilylpropyl-bis(diethylamino)methylethylsulfide,
dimethylmethoxysilyloctyl-bis(diethylamino)methylethylsulfide,
1-dimethylmethoxysilylethyldimethylsilyl-4-bis(diethylamino)methylsilylethyldimethyl-silylbenzene,
dimethylethoxysilylmethyl-bis(diethylamino)methylethylsulfide,
dimethylethoxysilylpropyl-bis(diethylamino)methylethylsulfide,
dimethylethoxysilyloctyl-bis(diethylamino)methylethylsulfide and
1-dimethylethoxysilylethyldimethylsilyl-4-bis(diethylamino)methylsilylethyldimethyl-silylbenzene;
trialkoxysilyl-tris(dialkylamino)alkanes such as
1-trimethoxysilyl-2-tris(dimethylamino)silylethylene,
1-triethoxysilyl-2-tris(dimethylamino)silylethylene,
1-trimethoxysilyl-2-tris(diethylamino)silylethylene,
1-triethoxysilyl-2-tris(diethylamino)silylethylene,
1-trimethoxysilyl-2-tris(morpholino)silylethylene and
1-triethoxysilyl-2-tris(morpholino)silylethylene; and
alkyldialkoxysilyl-tris(dialkylamino)alkanes such as
1-methyldimethoxysilyl-2-tris(dimethylamino)silylethylene,
1-methyldiethoxysilyl-2-tris(dimethylamino)silylethylene,
1-methyldimethoxysilyl-2-tris(diethylamino)silylethylene,
1-methyldiethoxysilyl-2-tris(diethylamino)silylethylene,
1-methyldimethoxysilyl-2-tris(morpholino)silylethylene and
1-methyldiethoxysilyl-2-tris(morpholino)silylethylene.

The acidic compound used in the amine exchange reaction is an acidic compound of pKa 4 to 12, preferably pKa 7 to 10. By using such an acidic compound, side reactions can be reduced and the amount of Compound (1) produced can be increased.

Specific examples of pKa 4 to 12 acidic compounds include carboxylic acids such as acetic acid, propionic acid, hexanoic acid and octanoic acid; ammonium halides such as ammonium chloride and ammonium bromide; hydrogen halide salts of amines, such as diethylamine hydrochloride and diethylamine hydrobromide; ammonium sulfates such as ammonium sulfate and ammonium sulfamate; ammonium sulfonates such as ammonium methanesulfonate and ammonium dodecylbenzenesulfonate; and sulfonamides such as p-toluenesulfonamide and o-toluenesulfonamide.

Of these, from the standpoint of the reaction promoting effect and the dearth of side reactions, ammonium halides, hydrogen halide salts of amines and ammonium sulfonates are preferred; hydrogen halide salts of amines are more preferred.

There is no particular limitation on the amount in which the pKa 4 to 12 acidic compound is used, although the amount per mole of Compound (3) is preferably from 0.000001 to 0.02 mole, more preferably from 0.000005 to 0.01 mole, and even more preferably from 0.00001 to 0.005 mole.

The temperature of the amine exchange reaction is preferably between 30°C and 150°C, and more preferably between 50°C and 110°C.

The amine exchange reaction time is preferably from 30 to 600 minutes, more preferably from 60 to 600 minutes, and even more preferably from 60 to 300 minutes.

In the preparation method of the invention, Compound (1) can be efficiently prepared by using a polar aprotic solvent.

Examples of solvents that may be used include nitriles such as acetonitrile, propionitrile, butyronitrile and isobutyronitrile; ether compounds such as tetrahydrofuran, 2-methyltetrahydrofuran, tetrahydropyran, 4-methyltetrahydropyran and cyclopentyl methyl ether; and amide compounds such as N,N-dimethylformamide, dimethylacetamide and N-methylpyrrolidone. Of these, nitrile compounds, which have a high reaction-promoting effect and do not readily give rise to side reactions, are preferred; acetonitrile is most preferred.

By neutralizing the above pKa 4 to 12 acidic compounds following reaction completion, the stability of Compound (1) and above Compositions 1 and 2 can be increased. In such cases, the basic compound used in neutralization is not particularly limited, although a solid basic compound is preferred.

Specific examples of solid basic compounds include aluminum hydroxide, hydrotalcite, magnesium silicate, aluminum silicate, aluminum oxide and magnesium oxide. These may be used singly, or two or more may be used in combination.

Commercial products may be used as such solid basic compounds and may be acquired as, for example, the Kyowaad Series (Kyowaad 100, 200, 300, 500, 600, 700 and 2000) from Kyowa Chemical Industry Co., Ltd.

The amount in which the solid basic compound is used, although not particularly limited, is preferably from 1.0 to 2.0 moles, more preferably from 1.0 to 1.8 moles, and even more preferably from 1.2 to 1.8 moles, per mole of the pKa 4 to 12 acidic compound used.

It is preferable to separate off any salt that has arisen in the neutralization reaction and excess solid basic compound. The method of separation is not particularly limited, although separation by filtration is easy and convenient.

Conventional purification methods in organic synthesis, such as filtration, distillation, vacuum stripping, various types of chromatography or treatment using an adsorbent, may be suitably selected and used to isolate the target Compound (1) or Compounds (1) and (2) from the reaction mixture obtained by the above series of reactions.

Of these methods, from the standpoint of the production efficiency and to enable the target substance to be highly purified, purification by vacuum stripping or by distillation is preferred.

### [4] Cured Product

The cured product of the invention is either one obtained by curing Compound (1) itself, or one obtained by curing Compounds (1) and (2). Specifically, it is a cured product obtained by carrying out hydrolytic condensation reactions on the alkoxysilyl groups included in Compounds (1) and/or (2) and thereby curing the compound. When a solvent is included, the solvent may or may not first be evaporated off prior to curing, or curing may be carried out while evaporating off the solvent.

Curing may be carried out at room temperature or under applied heat.

The temperature at this time is not particularly limited, provided that it does not impart an adverse influence on the substrate. However, in order to maintain the reactivity, the temperature is preferably between 0 and 250°C, more preferably between 20 and 180°C, and even more preferably between 20 and 150°C.

Due to reaction with moisture in air, the relative humidity is preferably from 15 to 100%, and more preferably from 25 to 80%.

It is also possible to obtain a coated substrate by applying Compound (1), Composition 1 or Composition 2 of the invention onto the surface of a substrate made of, for example, an inorganic material or an organic material, and then having the compound or composition react with moisture in the air, causing it to cure.

Specific examples of inorganic materials include metal, glass, silica, alumina, talc, calcium carbonate and carbon. These are not particularly limited as to their shape, and may be in the form of, for example, a plate, a sheet, fibers or a powder.

Glasses that may be used include commonly used types of glass such as E-glass, C-glass and silica glass. Glass fibers may also be used. The glass fibers may be an aggregate thereof, such as a bundle, twisted yarn or woven fabric of 3 to 30 µm diameter glass filaments.

Specific examples of organic materials include resin materials such as polyethylene, polypropylene, polystyrene, poly(meth)acrylate, polyvinyl chloride, polycarbonate, nylon, polyurethane, polybutylene terephthalate, polyethylene terephthalate, ABS (a polymer of acrylonitrile, butadiene and styrene), melamine, phenol, epoxy and polyimide; and elastomers or rubber materials, such as polybutadiene rubber, polyisopropylene rubber, nitrile rubber, neoprene rubber, polysulfide and urethane rubber.

The shape of the substrate is not particularly limited and may be plate-like, sheet-like, fibrous or powdery.

A known coating method may be employed as the method of application onto the substrate. Examples include brush coating, sponge coating, application with a cloth, spray coating, wiper coating, blade coating, roll coating, dipping and spin coating.

In powdery materials such as silica, alumina, talc and calcium carbonate, a mixing method which directly mixes Compound (1), Composition 1 or Composition 2 together with the substrate in a mixer or mill may be employed.

### EXAMPLES

Examples of the invention, Comparative Examples and Synthesis Examples are given below by way of illustration, although the invention is not limited by these Examples.

### [Example 1-1]

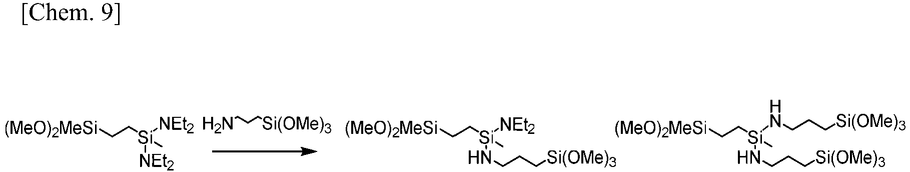

Here and below, "Me" stands for a methyl group and "Et" stands for an ethyl group.

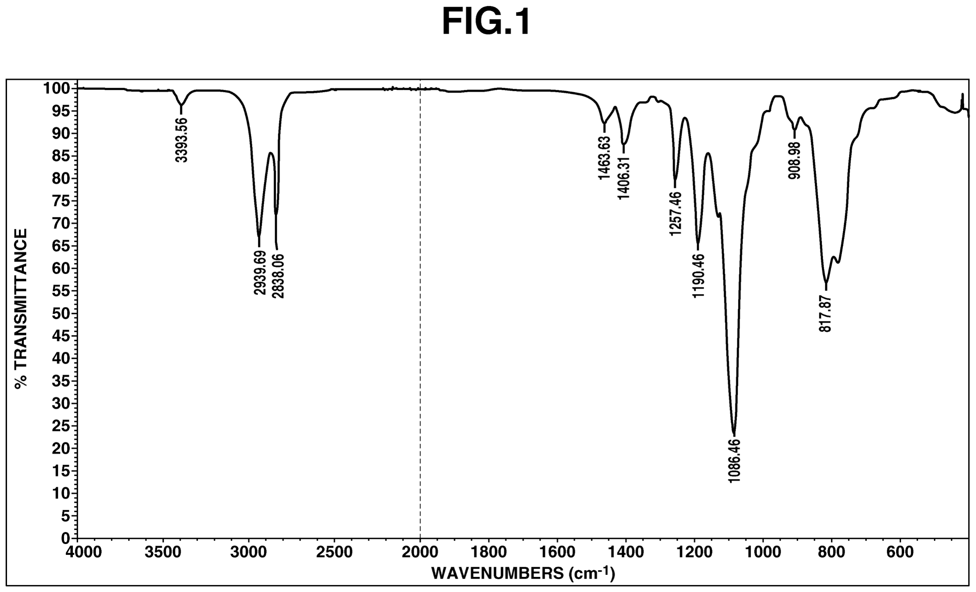

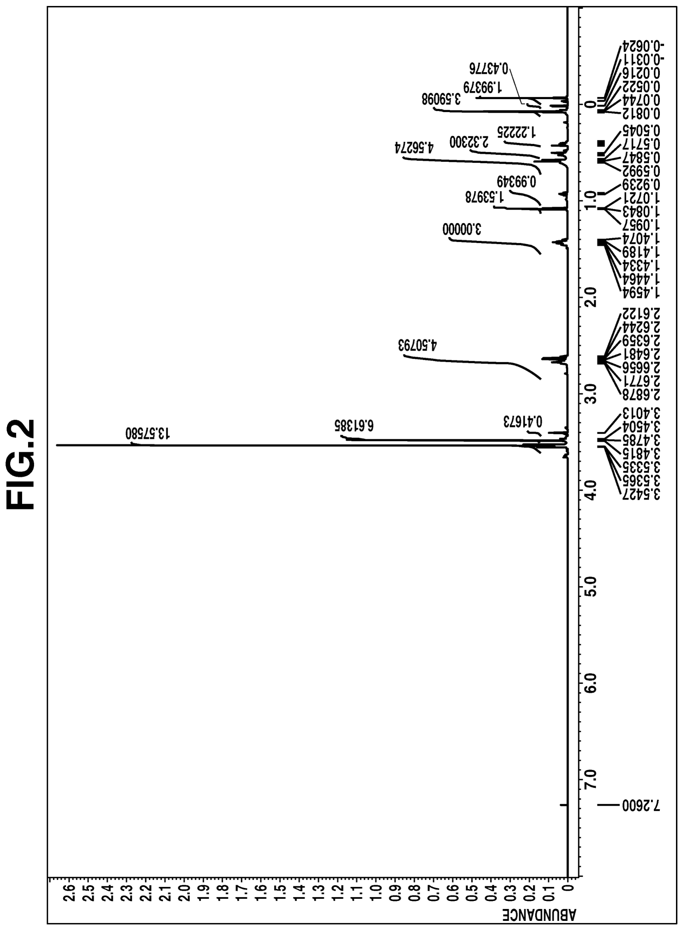

The interior of a four-neck glass flask equipped with a stirrer, a thermometer and a reflux condenser was purged with nitrogen, charged with 32.1 g (0.100 mol) of 1-methyldimethoxysilyl-2-bis(diethylamino)methylsilylethylene, 26.9 g (0.150 mol) of 3-aminopropyltrimethoxysilane, 0.054 g (0.0010 mol) of ammonium chloride and 20 g of acetonitrile, and the flask contents were refluxed for 3 hours. The reaction mixture was analyzed by gas chromatography, confirming that diethylamine had formed and that an amine exchange reaction had taken place. Next, 2.2 g of Kyowaad 500SH (here and below, from Kyowa Chemical Industry Co., Ltd.) was added to the resulting reaction mixture, and the flask contents were stirred at room temperature for one hour. Diethylamine and acetonitrile were stripped from the resulting mixture and filtration was carried out, giving 43 g of Compound 1 (a mixture of 1-methyldimethoxysilyl-2-(diethylamino)-(trimethoxysilylpropylamino)methylsilylethylene and 1-methyldimethoxysilyl-2-bis(trimethoxysilylpropylamino)methylsilylethylene). FIGS. 1 and 2 show, respectively, an IR chart and an ¹H-NMR chart of Compound 1.

¹H-NMR analysis indicated decreases in the peaks attributable to diethylamine and IR analysis showed a peak at 3393 cm⁻¹ (NH), thus confirming formation of the target compound via an amine exchange reaction. From the results of GC analysis, the content of 3-aminopropyltrimethoxysilane was 0.7 wt%.

### [Example 1-2]

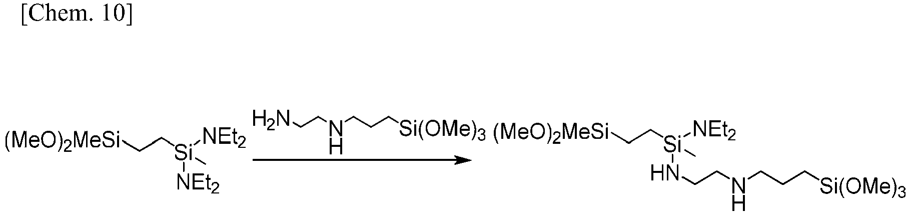

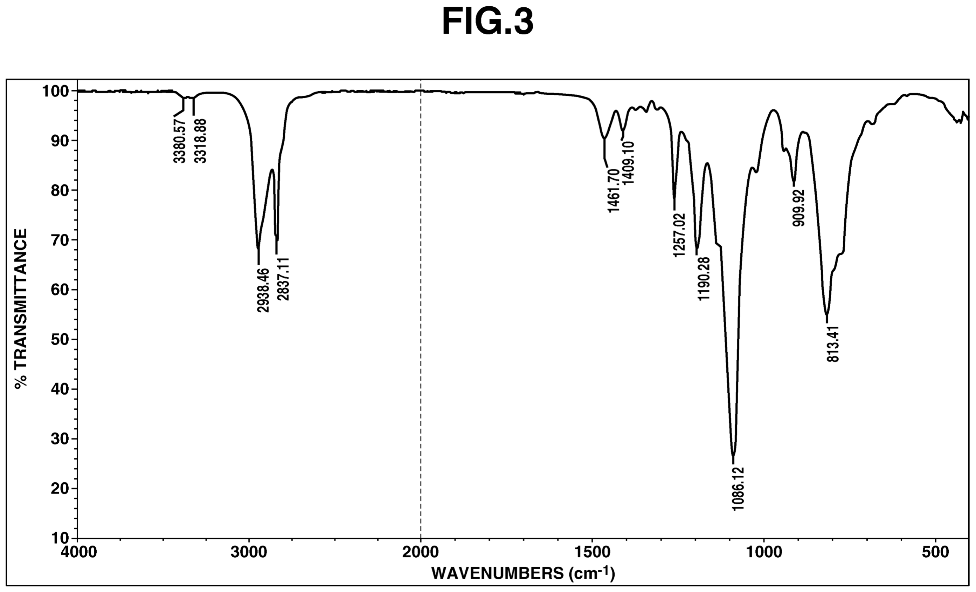

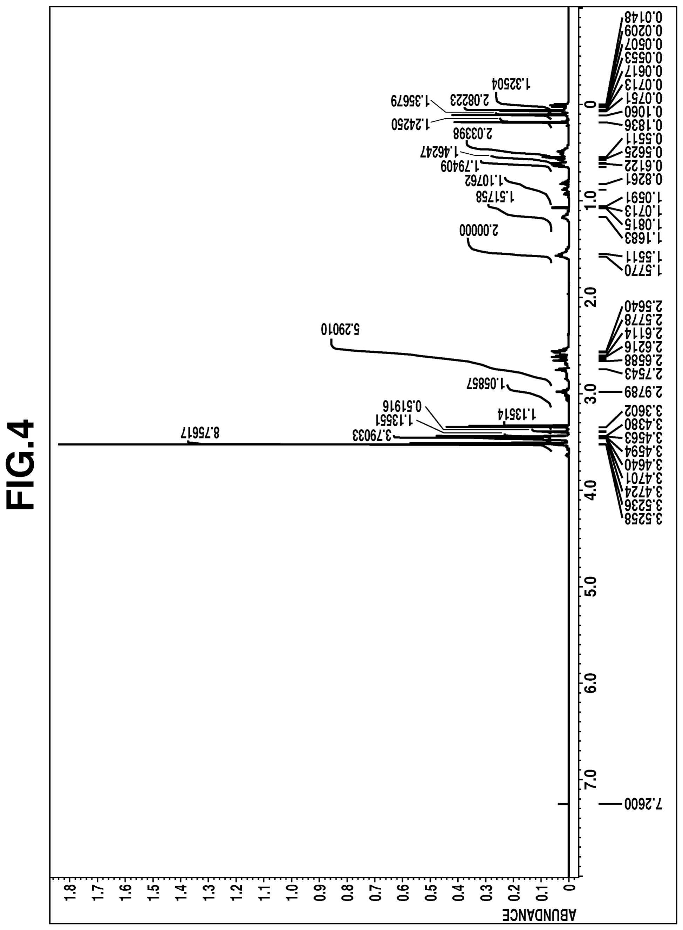

The interior of a four-neck glass flask equipped with a stirrer, a thermometer and a reflux condenser was purged with nitrogen, charged with 32.1 g (0.100 mol) of 1-methyldimethoxysilyl-2-bis(diethylamino)methylsilylethylene, 22.2 g (0.100 mol) of 3-(aminoethylamino)propyltrimethoxysilane, 0.054 g (0.0010 mol) of ammonium chloride and 20 g of acetonitrile, and the flask contents were refluxed for 3 hours. The reaction mixture was analyzed by gas chromatography, confirming that diethylamine had formed and that an amine exchange reaction had taken place. Next, 2.2 g of Kyowaad 500SH (Kyowa Chemical Industry Co., Ltd.) was added to the resulting reaction mixture, and the flask contents were stirred at room temperature for one hour. Diethylamine and acetonitrile were stripped from the resulting mixture and filtration was carried out, giving 36 g of Compound 2 (1-methyldimethoxysilyl-2-(diethylamino)(trimethoxysilylpropylamino-ethylamino)methylsilylethylene). FIGS. 3 and 4 show, respectively, an IR chart and an ¹H-NMR chart of Compound 2.

¹H-NMR analysis indicated decreases in the peaks attributable to diethylamine and IR analysis showed a peak at 3380 cm⁻¹ (NH), thus confirming formation of the target compound via an amine exchange reaction. From the results of GC analysis, the content of 3-(aminoethylamino)propyltrimethoxysilane was 0 wt%.

### [Example 1-3]

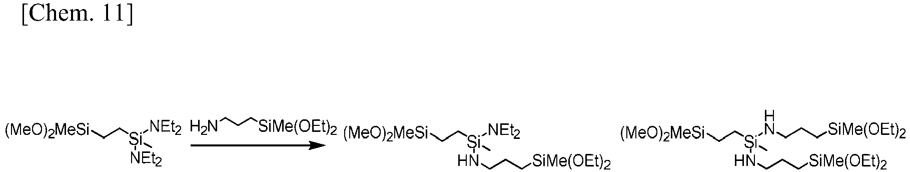

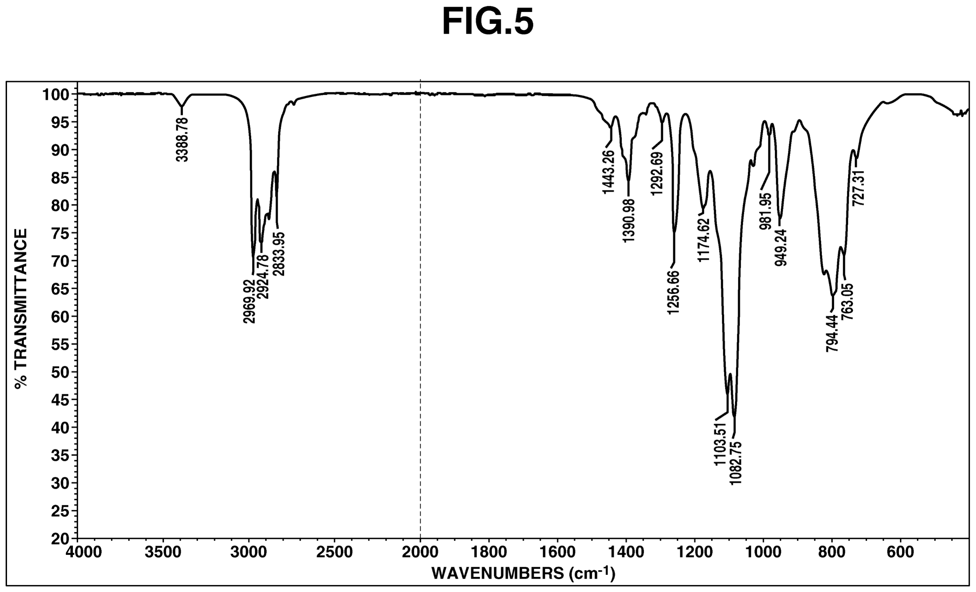

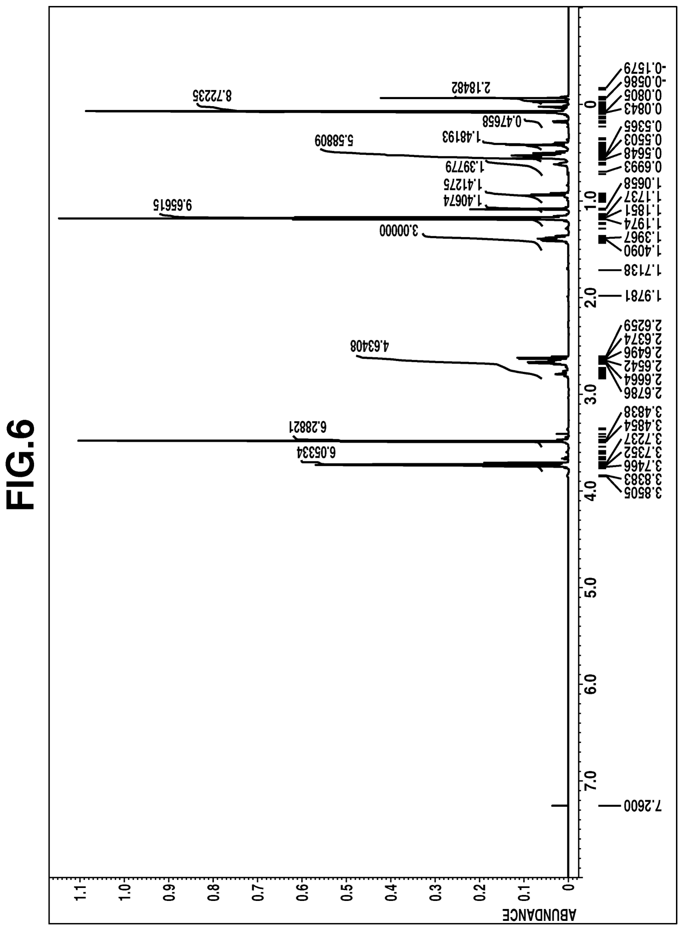

The interior of a four-neck glass flask equipped with a stirrer, a thermometer and a reflux condenser was purged with nitrogen, charged with 32.1 g (0.100 mol) of 1-methyldimethoxysilyl-2-bis(diethylamino)methylsilylethylene, 28.7 g (0.150 mol) of 3-aminopropylmethyldiethoxysilane, 0.027 g (0.00050 mol) of ammonium chloride and 20 g of acetonitrile, and the flask contents were refluxed for 3 hours. The reaction mixture was analyzed by gas chromatography, confirming that diethylamine had formed and that an amine exchange reaction had taken place. Next, 1.2 g of Kyowaad 500SH (Kyowa Chemical Industry Co., Ltd.) was added to the resulting reaction mixture, and the flask contents were stirred at room temperature for one hour. Diethylamine and acetonitrile were stripped from the resulting mixture and filtration was carried out, giving 43 g of Compound 3 (a mixture of 1-methyldimethoxysilyl-2-(diethylamino)(methyldiethoxy-silylpropylamino)methylsilylethylene and 1-methyldimethoxysilyl-2-bis(methyldiethoxysilylpropylamino)methylsilylethylene). FIGS. 5 and 6 show, respectively, an IR chart and an ¹H-NMR chart of Compound 3.

¹H-NMR analysis indicated decreases in the peaks attributable to diethylamine and IR analysis showed a peak at 3388 cm⁻¹ (NH), thus confirming formation of the target compound via an amine exchange reaction. From the results of GC analysis, the content of 3-aminopropylmethyldiethoxysilane was 0.8 wt%.

### [Example 1-4]

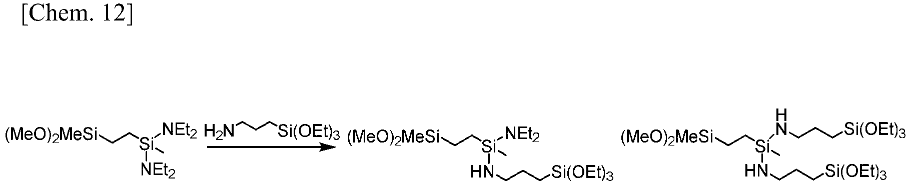

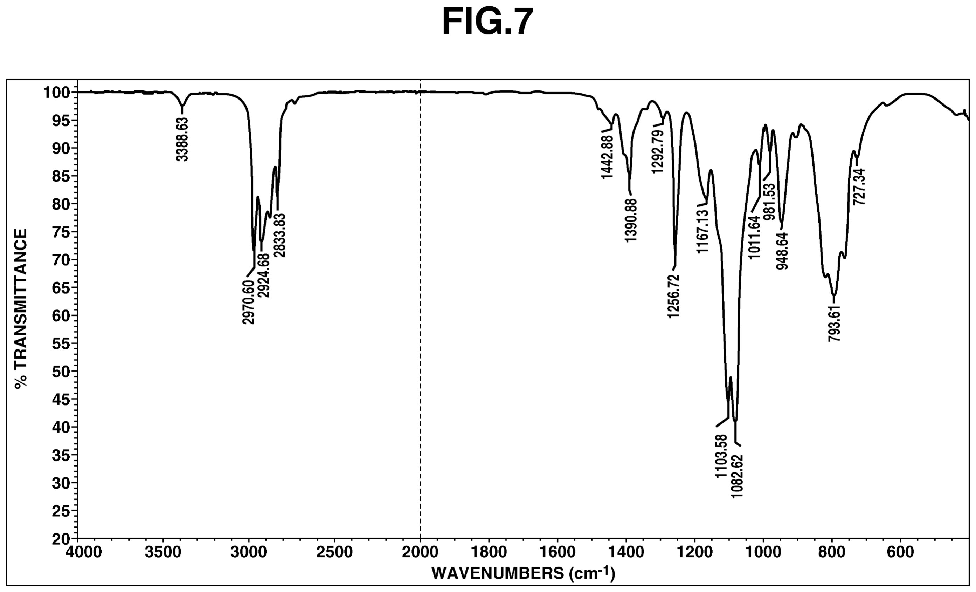

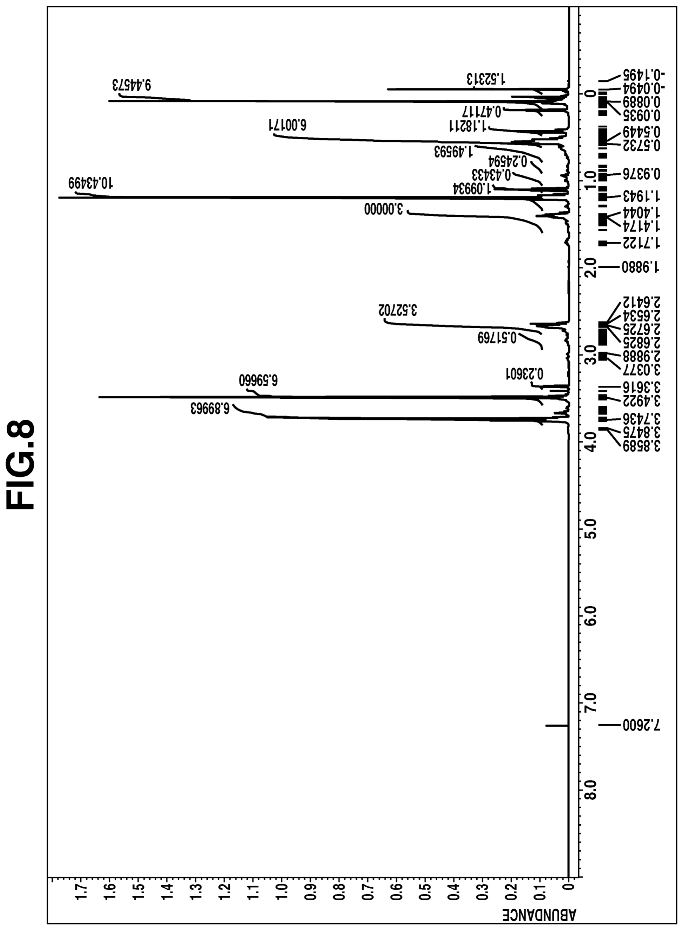

The interior of a four-neck glass flask equipped with a stirrer, a thermometer and a reflux condenser was purged with nitrogen, charged with 32.1 g (0.100 mol) of 1-methyldimethoxysilyl-2-bis(diethylamino)methylsilylethylene, 28.7 g (0.150 mol) of 3-aminopropyltriethoxysilane, 0.055 g (0.00050 mol) of diethylamine hydrochloride and 20 g of acetonitrile, and the flask contents were refluxed for 3 hours. The reaction mixture was analyzed by gas chromatography, confirming that diethylamine had formed and that an amine exchange reaction had taken place. Next, 1.2 g of Kyowaad 500SH (Kyowa Chemical Industry Co., Ltd.) was added to the resulting reaction mixture, and the flask contents were stirred at room temperature for one hour. Diethylamine and acetonitrile were stripped from the resulting mixture and filtration was carried out, giving 47 g of Compound 4 (a mixture of 1-methyldimethoxysilyl-2-(diethylamino)(triethoxysilyl-propylamino)methylsilylethylene and 1-methyldimethoxysilyl-2-bis(triethoxysilylpropylamino)methylsilylethylene). FIGS. 7 and 8 show, respectively, an IR chart and an ¹H-NMR chart of Compound 4.

¹H-NMR analysis indicated decreases in the peaks attributable to diethylamine and IR analysis showed a peak at 3388 cm⁻¹ (NH), thus confirming formation of the target compound via an amine exchange reaction. From the results of GC analysis, the content of 3-aminopropyltriethoxysilane was 0.6 wt%.

### [Example 1-5]

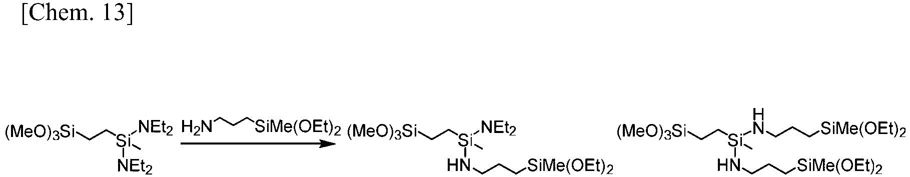

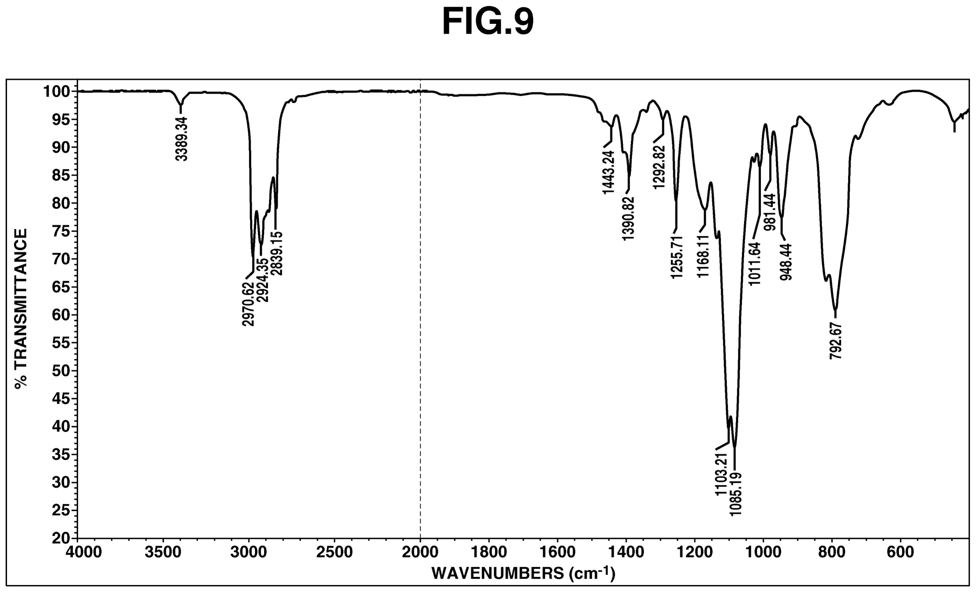

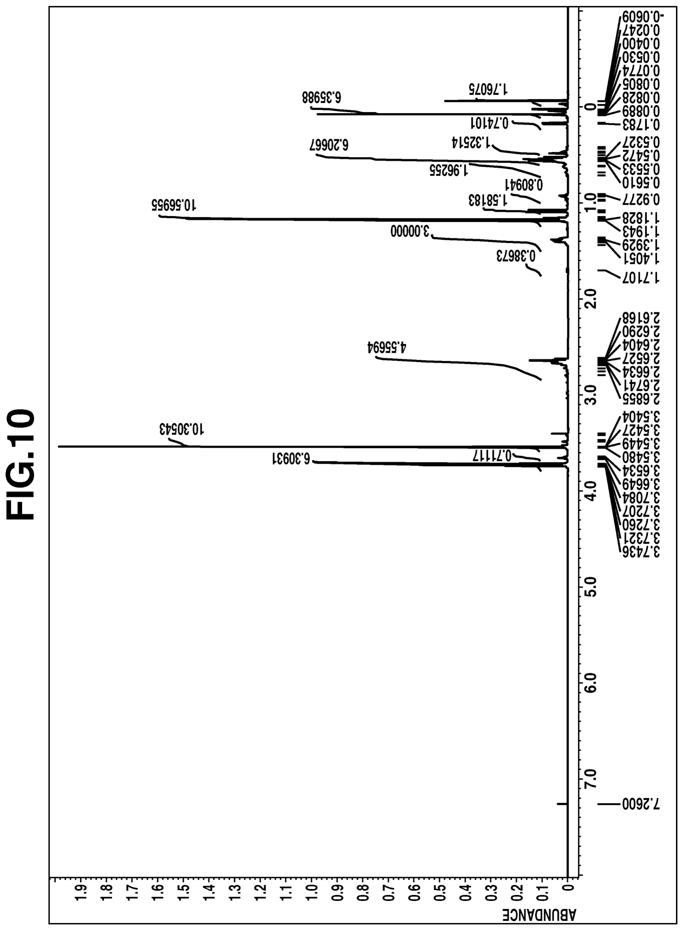

The interior of a four-neck glass flask equipped with a stirrer, a thermometer and a reflux condenser was purged with nitrogen, charged with 33.7 g (0.100 mol) of 1-trimethoxysilyl-2-bis(diethylamino)methylsilylethylene, 28.7 g (0.150 mol) of 3-aminopropylmethyldiethoxysilane, 0.027 g (0.00050 mol) of ammonium chloride and 20 g of acetonitrile, and the flask contents were refluxed for 3 hours. The reaction mixture was analyzed by gas chromatography, confirming that diethylamine had formed and that an amine exchange reaction had taken place. Next, 1.2 g of Kyowaad 500SH (Kyowa Chemical Industry Co., Ltd.) was added to the resulting reaction mixture, and the flask contents were stirred at room temperature for one hour. Diethylamine and acetonitrile were stripped from the resulting mixture and filtration was carried out, giving 44 g of Compound 5 (a mixture of 1-trimethoxysilyl-2-(diethylamino)(methyldiethoxysilyl-propylamino)methylsilylethylene and 1-trimethoxysilyl-2-bis(methyldiethoxysilylpropylamino)methylsilylethylene). FIGS. 9 and 10 show, respectively, an IR chart and an ¹H-NMR chart of Compound 6.

¹H-NMR analysis indicated decreases in the peaks attributable to diethylamine and IR analysis showed a peak at 3389 cm⁻¹ (NH), thus confirming formation of the target compound via an amine exchange reaction. From the results of GC analysis, the content of 3-aminopropylmethyldiethoxysilane was 0.7 wt%.

### [Example 1-6]

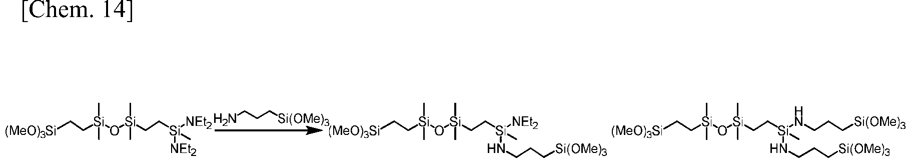

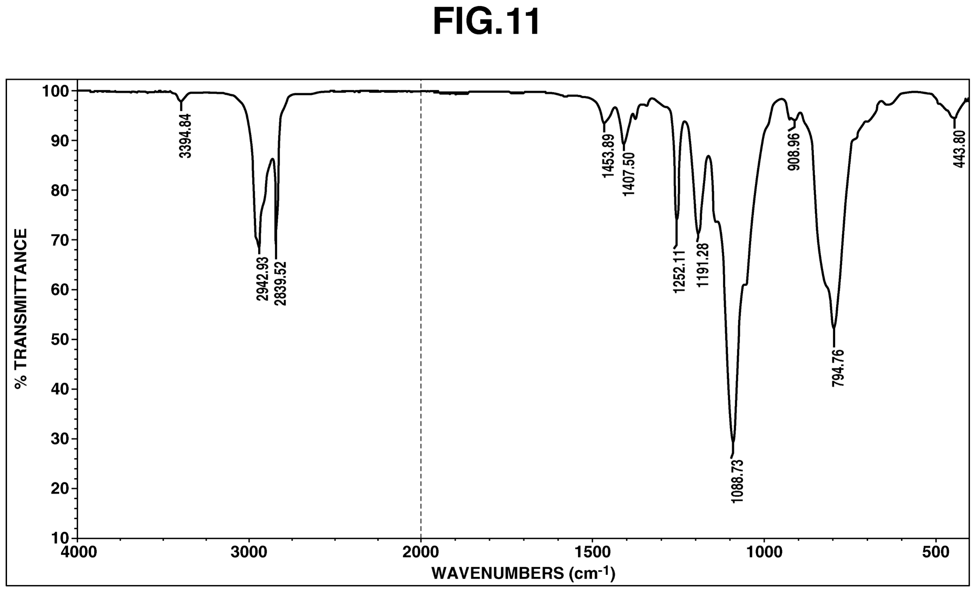

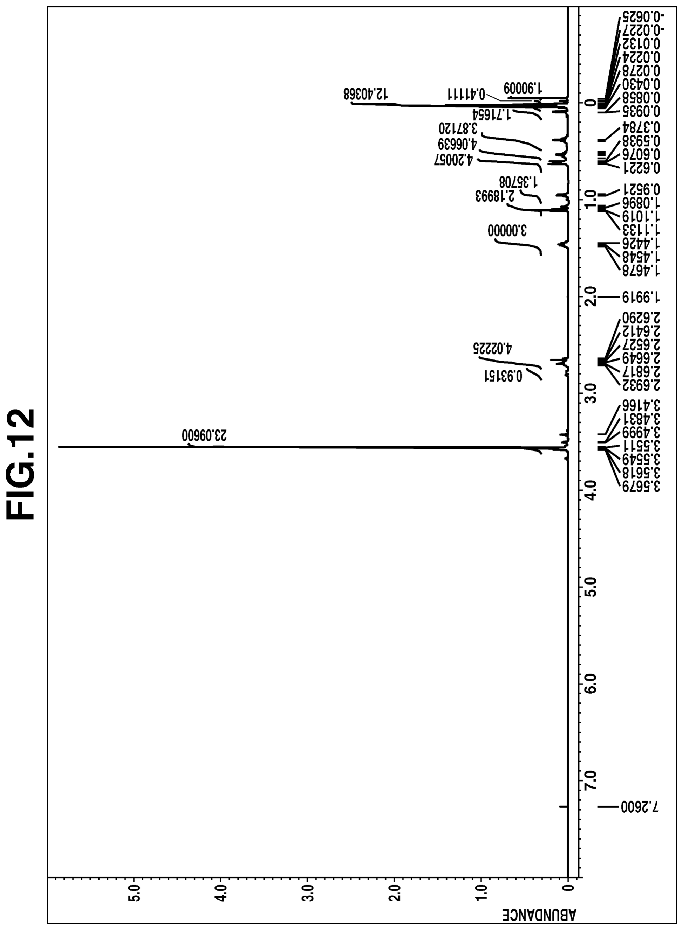

The interior of a four-neck glass flask equipped with a stirrer, a thermometer and a reflux condenser was purged with nitrogen, charged with 49.7 g (0.100 mol) of 1-trimethoxysilylethyl-3-bis(diethylamino)methylsilylethyl-1,1,3,3-tetramethyldisiloxane, 26.9 g (0.150 mol) of 3-aminopropyltrimethoxysilane, 0.027 g (0.00050 mol) of ammonium chloride and 20 g of acetonitrile, and the flask contents were refluxed for 3 hours. The reaction mixture was analyzed by gas chromatography, confirming that diethylamine had formed and that an amine exchange reaction had taken place. Next, 1.2 g of Kyowaad 500SH (Kyowa Chemical Industry Co., Ltd.) was added to the resulting reaction mixture, and the flask contents were stirred at room temperature for one hour. Diethylamine and acetonitrile were stripped from the resulting mixture and filtration was carried out, giving 59 g of Compound 6 (a mixture of 1-trimethoxysilylethyl-3-(diethylamino)(trimethoxy-silylpropylamino)methylsilylethyl-1,1,3,3-tetramethyldisiloxane and 1-trimethoxysilylethyl-3-bis(trimethoxysilylpropylamino)methylsilylethyl-1,1,3,3-tetramethyldisiloxane). FIGS. 11 and 12 show, respectively, an IR chart and an ¹H-NMR chart of Compound 7.

¹H-NMR analysis indicated decreases in the peaks attributable to diethylamine and IR analysis showed a peak at 3394 cm⁻¹ (NH), thus confirming formation of the target compound via an amine exchange reaction. From the results of GC analysis, the content of 3-aminopropyltrimethoxysilane was 0.7 wt%.

### [Example 1-7]

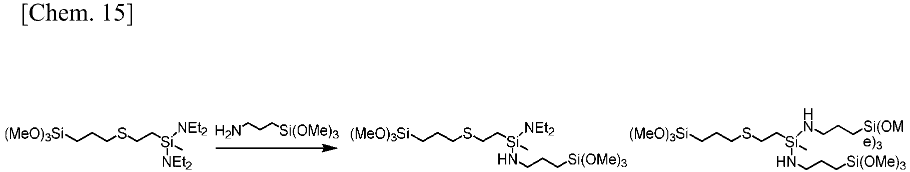

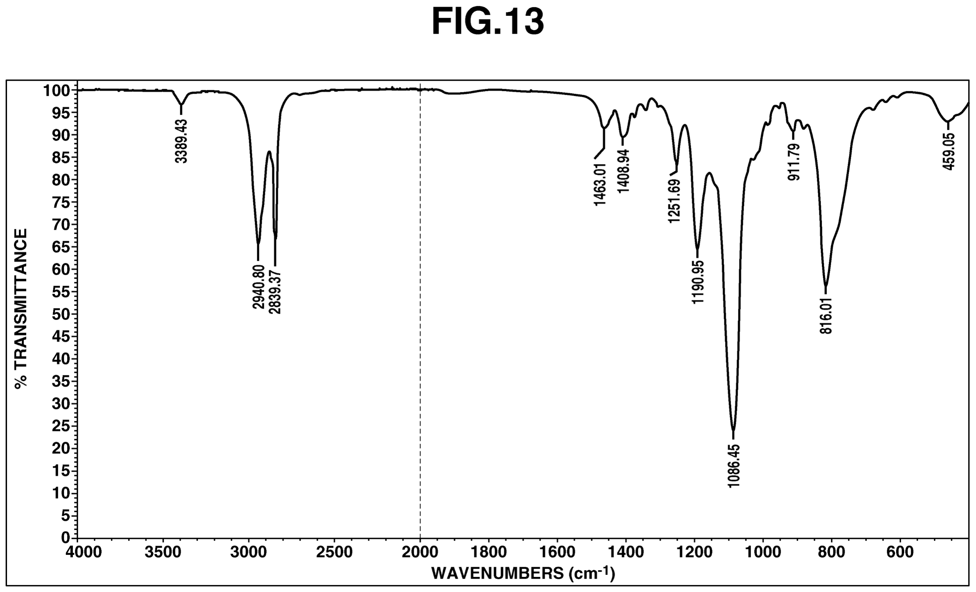

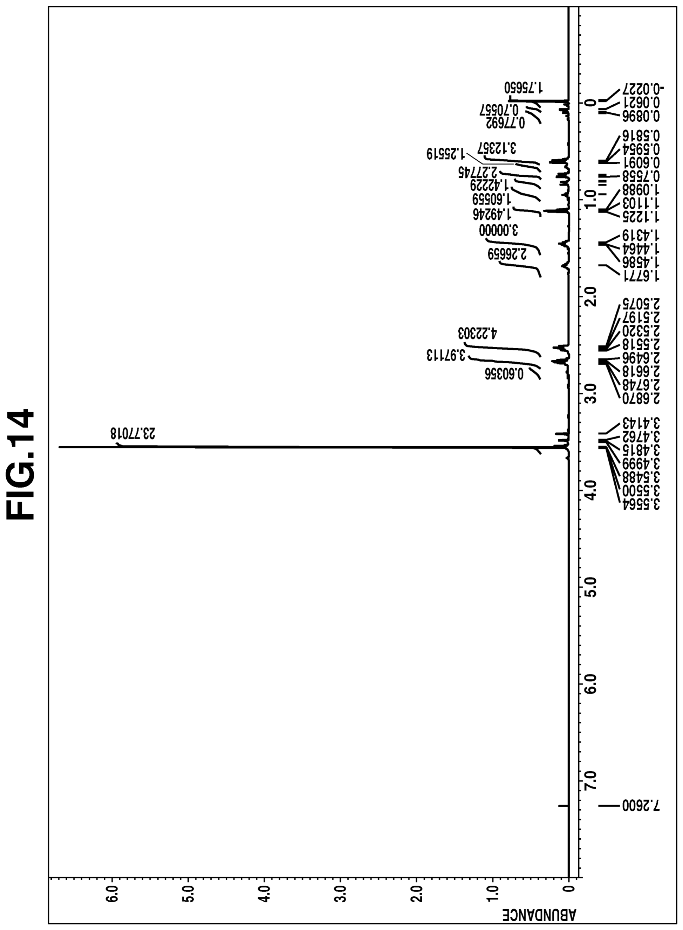

The interior of a four-neck glass flask equipped with a stirrer, a thermometer and a reflux condenser was purged with nitrogen, charged with 41.1 g (0.100 mol) of trimethoxysilylpropyl-bis(diethylamino)methylethylsulfide, 26.9 g (0.150 mol) of 3-aminopropyltrimethoxysilane, 0.0027 g (0.00050 mol) of ammonium chloride and 20 g of acetonitrile, and the flask contents were refluxed for 3 hours. The reaction mixture was analyzed by gas chromatography, confirming that diethylamine had formed and that an amine exchange reaction had taken place. Next, 1.2 g of Kyowaad 500SH (Kyowa Chemical Industry Co., Ltd.) was added to the resulting reaction mixture, and the flask contents were stirred at room temperature for one hour. Diethylamine and acetonitrile were stripped from the resulting mixture and filtration was carried out, giving 50 g of Compound 7 (a mixture of trimethoxysilylpropyl-(diethylamino)(trimethoxysilylpropyl-amino)methylethylsulfide and trimethoxysilylpropyl-bis(trimethoxysilylpropylamino)methylethylsulfide). FIGS. 13 and 14 show, respectively, an IR chart and an ¹H-NMR chart of Compound 8.

¹H-NMR analysis indicated decreases in the peaks attributable to diethylamine and IR analysis showed a peak at 3389 cm⁻¹ (NH), thus confirming formation of the target compound via an amine exchange reaction. From the results of GC analysis, the content of 3-aminopropyltrimethoxysilane was 0.8 wt%.

### [Example 1-8]

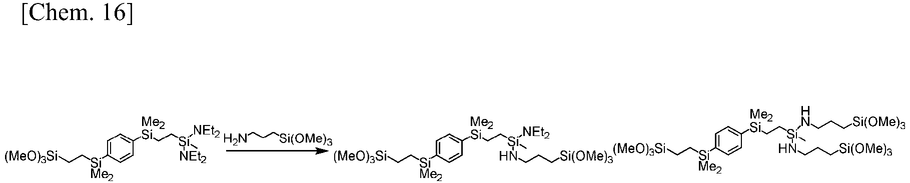

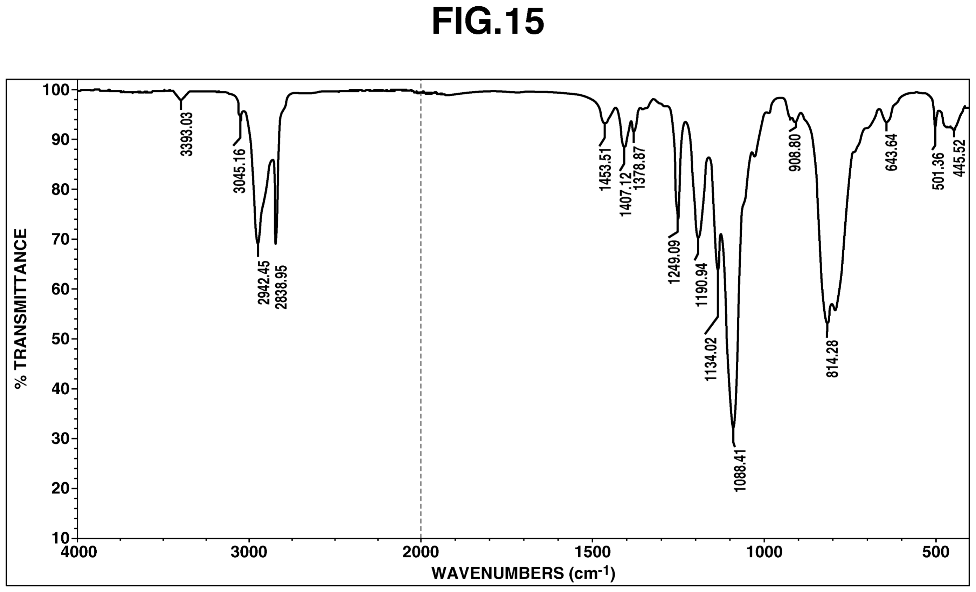

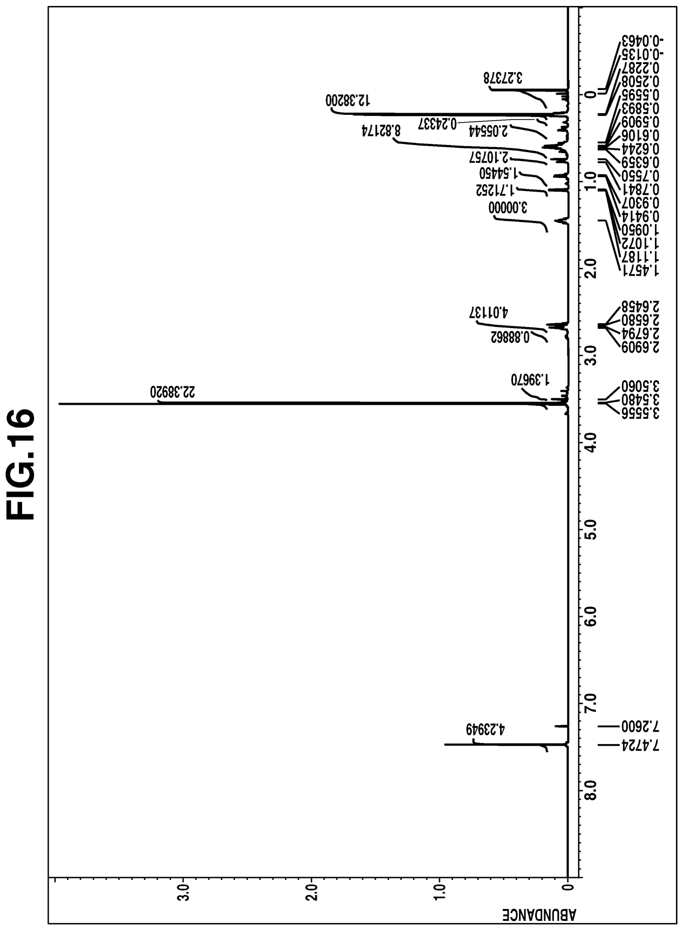

The interior of a four-neck glass flask equipped with a stirrer, a thermometer and a reflux condenser was purged with nitrogen, charged with 55.7 g (0.100 mol) of 1-trimethoxysilylethyldimethylsilyl-4-bis(diethylamino)methylsilylethyldimethylsilylbenzene, 26.9 g (0.150 mol) of 3-aminopropyltrimethoxysilane, 0.027 g (0.00050 mol) of ammonium chloride and 20 g of acetonitrile, and the flask contents were refluxed for 3 hours. The reaction mixture was analyzed by gas chromatography, confirming that diethylamine had formed and that an amine exchange reaction had taken place. Next, 1.2 g of Kyowaad 500SH (Kyowa Chemical Industry Co., Ltd.) was added to the resulting reaction mixture, and the flask contents were stirred at room temperature for one hour. Diethylamine and acetonitrile were stripped from the resulting mixture and filtration was carried out, giving 62 g of Compound 8 (a mixture of 1-trimethoxysilylethyldimethylsilyl-4-(diethylamino)-(trimethoxysilylpropylamino)methylsilylethyldimethylsilylbenzene and 1-trimethoxysilylethyldimethylsilyl-4-bis(trimethoxysilylpropylamino)methylsilyl-ethyldimethylsilylbenzene). FIGS. 15 and 16 show, respectively, an IR chart and an ¹H-NMR chart of Compound 10.

¹H-NMR analysis indicated decreases in the peaks attributable to diethylamine and IR analysis showed a peak at 3393 cm⁻¹ (NH), thus confirming formation of the target compound via an amine exchange reaction. From the results of GC analysis, the content of 3-aminopropyltrimethoxysilane was 0.7 wt%.

### [Example 1-9]

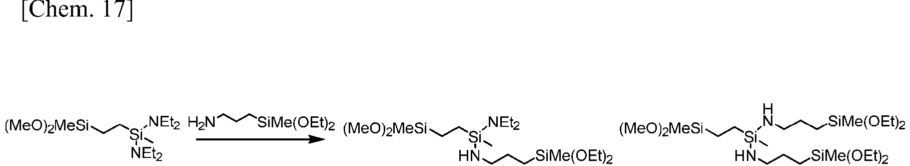

Aside from changing the ammonium chloride to 0.055 g (0.00050 mol) of diethylamine hydrochloride, the same procedure was carried out as in Example 1-3, giving 47 g of product. IR and ¹H-NMR analyses were carried out, confirming that the same Compound 3 as in Example 1-3 was produced. From the results of GC analysis, the content of 3-aminopropylmethyldiethoxysilane was 0.7 wt%.

### [Example 1-10]

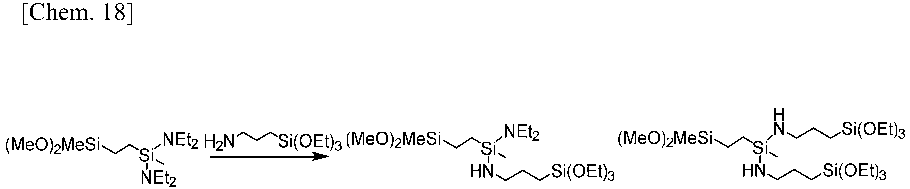

Aside from changing the diethylamine hydrochloride to 0.0077 g (0.00050 mol) of diethylamine hydrobromide, the same procedure was carried out as in Example 1-4, giving 46 g of product. IR and ¹H-NMR analyses were carried out, confirming that the same Compound 4 as in Example 1-4 was produced.

### [Example 1-11]

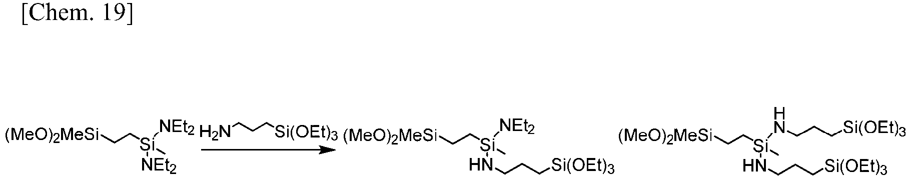

Aside from changing the diethylamine hydrochloride to 0.0066 g (0.00050 mol) of ammonium sulfate, the same procedure was carried out as in Example 1-4, giving 48 g of product. IR and ¹H-NMR analyses were carried out, confirming that the same Compound 4 as in Example 1-4 was produced.

### [Example 1-12]

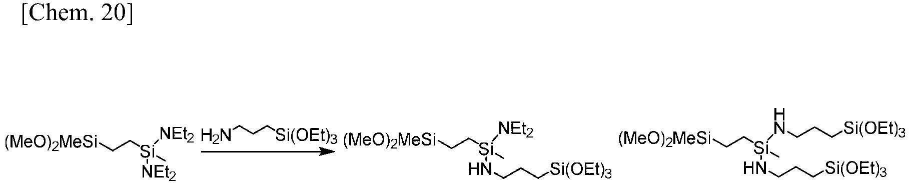

Aside from changing the diethylamine hydrochloride to 0.086 g (0.0050 mol) of p-toluenesulfonamide, the same procedure was carried out as in Example 1-4, giving 47 g of product. IR and ¹H-NMR analyses were carried out, confirming that the same Compound 4 as in Example 1-4 was produced.

### [Example 1-13]

Aside from setting the amount of 3-aminopropyltriethoxysilane used to 37.6 g (0.170 mol), the same procedure was carried out as in Example 1-4. The reaction mixture was analyzed by gas chromatography, confirming that diethylamine had formed and that an amine exchange reaction had taken place, but 3-aminopropyltriethoxysilane remained behind. The amount of product obtained was 57 g.

¹H-NMR analysis indicated decreases in the peaks attributable to diethylamine. IR and ¹H-NMR analyses were carried out, confirming the formation of the same Compound 4 as in Example 1-4. From the results of GC analysis, the content of 3-aminopropyltriethoxysilane was 7 wt%. It was thus possible to confirm this to be a composition of Compound 4 and 3-aminopropyltriethoxysilane.

### [Synthesis Example]

### Synthesis of 1-Methyldimethoxysilyl-2-Bis(diethylamino)methylsilylethylene

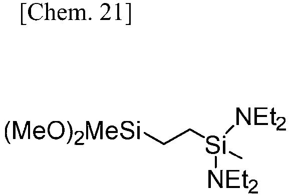

A comparative compound (1-methyldimethoxysilyl-2-bis(diethylamino)-methylsilylethylene) having the above structural formula was obtained by following the procedure in Example 2 of Patent Document 1.

### [Example 2-1]

Compound 1 obtained in Example 1-1 was applied with a bar coater onto cleaned polished steel plates (10 cm × 15 cm) and soda glass (7 cm × 15 cm) to a wet thickness of 30 µm, thereby giving test specimens of each.

The resulting polished steel plate test specimens were left at rest in a 25°C, 50% relative humidity environment and the tack-free time, this being the time it takes to attain a touch dry state where Compound 1 does not stick to the fingertips when the surface of the test specimen is touched, was measured by the method set forth in JIS K5600-1-1. The results are shown in Table 1.

In addition, after attaining touch dryness, the test specimen was left at rest for one day at room temperature (15 to 20°C), following which the appearance of the film was visually assessed according to the following criteria.

| | |
|---|---|
| ○: | The film remains clear and unchanged |
| ×: | Cracks and peeling have arisen |
| Clouding: | The film has clouded |

The coated soda glass test specimens were left at rest for one week at room temperature (about 23°C), and the film hardness was measured by the method set forth in JIS K5600-5-4. The results are shown in Table 1.

### [Examples 2-2 to 2-8, and Comparative Example]

Aside from changing Compound 1 to Compounds 2 to 8 obtained in Examples 1-2 to 1-8 and to the comparative compound obtained in the Synthesis Example, evaluation was carried out in the same way as in Example 2-1. The results are shown in Table 1.

**[Table 1]**

| | Example 2-1 | Example 2-2 | Example 2-3 | Example 2-4 | Example 2-5 | Example 2-6 | Example 2-7 | Example 2-8 | Comparative Example |
|---|---|---|---|---|---|---|---|---|---|
| Tack-free time (min) | < 30 | < 30 | < 30 | < 30 | < 30 | < 30 | < 30 | < 30 | 360 |
| Film appearance | ○ | ○ | ○ | ○ | ○ | ○ | ○ | ○ | ×, clouding |
| Pencil hardness | 6H | 6H | 3H | 6H | 5H | 4H | 6H | 4H | not measurable |

As shown in Table 1, the results in Examples 2-1 to 2-8 demonstrate that the bissilyl compounds of the invention which have a silyl group substituted with an organoxysilylalkylamino group were able to form a film in a short time without the addition of a catalyst. Moreover, the resulting films had sufficient hardnesses, expressed in terms of the pencil hardness, of 3H or more, and they were free of cracks and clouding.

On the other hand, it is apparent from the results in the Comparative Example that the comparative compound, although it was able to form a film without the addition of a catalyst, required a long time for film formation to occur. Moreover, cracks and clouding arose in the film thus obtained.

## Claims

1. A bissilyl compound which has a silyl group substituted with an organoxysilylalkylamino group and is represented by general formula (1) below 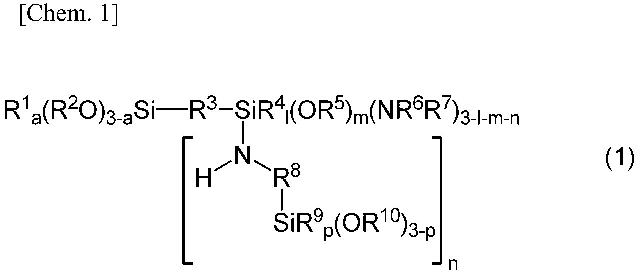 (wherein R¹, R², R⁴ to R⁷, R⁹ and R¹⁰ are each independently an unsubstituted monovalent hydrocarbon group of 1 to 10 carbon atoms and R⁶ and R⁷ may be mutually bonded and form together with the nitrogen atom to which they are linked a ring structure of 2 to 10 carbon atoms, which ring structure may include as part of the ring, aside from said nitrogen atom, at least one element selected from the group consisting of O and N; R³ and R⁸ are each independently a divalent hydrocarbon group of 2 to 10 carbon atoms which may include at least one element selected from the group consisting of O, N, S and Si; 'a' is 0, 1 or 2, 'l' and 'm' are each 0, 1 or 2; 'n' is 1, 2 or 3; and 'p' is 0, 1 or 2).

2. A composition comprising the bissilyl compound having a silyl group substituted with an organoxysilylalkylamino group of claim 1 and an amino group-containing organoxysilane compound of general formula (2) below 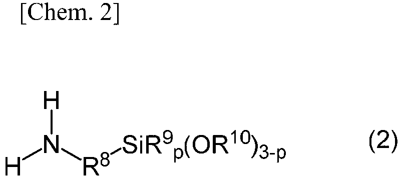 (wherein R⁸ to R¹⁰ and p are as defined above).

3. A composition comprising the bissilyl compound having a silyl group substituted with an organoxysilylalkylamino group of claim 1 and an aprotic solvent.

4. The composition of claim 2, further comprising an aprotic solvent.

5. A method for preparing the bissilyl compound having a silyl group substituted with an organoxysilylalkylamino group of claim 1, which method comprises the step of carrying out an amine exchange reaction between a primary aminoalkylorganoxysilane compound of general formula (2) 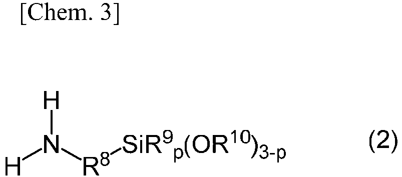 (wherein R⁸ to R¹⁰ and p are as defined above) and a bissilyl compound of general formula (3) below 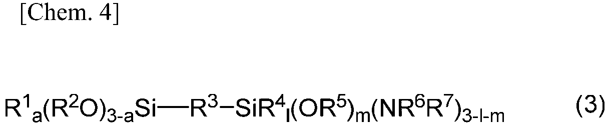 (wherein R¹ to R⁷, a, 1 and m are as defined above) in the presence of an acidic compound of pKa 4 to 12 and a polar aprotic solvent.

6. The method for preparing a bissilyl compound having a silyl group substituted with an organoxysilylalkylamino group according to claim 5, further comprising the step of neutralizing the acidic compound with a solid basic compound.

7. The method for preparing a bissilyl compound having a silyl group substituted with an organoxysilylalkylamino group according to claim 5 or 6, wherein the acidic compound of pKa 4 to 12 is an amine salt.

8. The method for preparing a bissilyl compound having a silyl group substituted with an organoxysilylalkylamino group according to claim 5 or 6, wherein the polar aprotic solvent is a nitrile compound.

9. A cured product obtained by curing the compound of claim 1 or the composition of claim 2.
